# EUROPÄISCHE PATENTSCHRIFT

(11) **EP 4 545 043 B1**
(45) Veröffentlichungstag und Bekanntmachung des Hinweises auf die Patenterteilung: **17.06.2026**
(21) Anmeldenummer: 23206439.4
(22) Anmeldetag: 27.10.2023
(51) Int. Cl.: A61C 13/00

(54) **VERFAHREN ZUM BESTIMMEN EINES INNENAUFBAUS EINER DENTALPROTHESENBASIS, VERFAHREN ZUR HERSTELLUNG EINER DENTALPROTHESENBASIS, DENTALPROTHESENBASIS, VORRICHTUNG ZUR DATENVERARBEITUNG, COMPUTERPROGRAMM UND COMPUTERLESBARES MEDIUM**
METHOD FOR DETERMINING AN INTERIOR OF A DENTURE BASE, METHOD FOR MANUFACTURING A DENTURE BASE, DEVICE FOR PROCESSING DATA, COMPUTER PROGRAM AND COMPUTER-READABLE MEDIUM
PROCÉDÉ DE DÉTERMINATION D'UNE STRUCTURE INTERNE D'UNE BASE DE PROTHÈSE DENTAIRE, PROCÉDÉ DE FABRICATION D'UNE BASE DE PROTHÈSE DENTAIRE, BASE DE PROTHÈSE DENTAIRE, DISPOSITIF DE TRAITEMENT DE DONNÉES, PROGRAMME INFORMATIQUE ET SUPPORT LISIBLE PAR ORDINATEUR

(43) Veröffentlichungstag der Anmeldung: 30.04.2025
(73) Patentinhaber: Ivoclar Vivadent AG, 9494 Schaan (LI)
(72) Erfinder: JOHN, Hendrik, Badäl 234 9487 Gamprin (LI)
(74) Vertreter: Maiwald GmbH

(56) Entgegenhaltungen:
- EP-A1- 3 342 370
- EP-B1- 3 470 011
- US-A1- 2022 142 757

## Beschreibung

Die Erfindung betrifft ein Verfahren zum Bestimmen eines Innenaufbaus einer Dentalprothesenbasis.

Zudem betrifft die Erfindung ein Verfahren zur Herstellung einer Dentalprothesenbasis.

Außerdem ist die Erfindung auf eine Dentalprothesenbasis gerichtet.

Ferner betrifft die Erfindung eine Vorrichtung zur Datenverarbeitung, ein Computerprogramm und ein computerlesbares Medium.

Dabei wird im Zusammenhang mit der vorliegenden Erfindung unter einer Dentalprothesenbasis derjenige Teil einer Dentalprothese verstanden, der nicht der Nachbildung von Zähnen dient. Die Dentalprothesenbasis bildet folglich im Wesentlichen Zahnfleisch nach. Ersatzzähne einer Dentalprothese gehören nicht zur Dentalprothesenbasis. Die Dentalprothesenbasis kann dabei Bestandteil einer Totalprothese oder einer Teilprothese sein.

Im Bereich der Herstellung von Dentalprothesen ist es bekannt, die Dentalprothesenbasis aus Kunststoff herzustellen. Im Sinne einer möglichst originalgetreuen Nachbildung des natürlichen Zahnfleisches kann dabei der Kunststoff, aus dem die Dentalprothesenbasis hergestellt wird, mit einer Farbe eingefärbt werden, die der natürlichen Zahnfleischfarbe entspricht.

Die EP 3 470 011 B1 beschreibt ein Zahnprothesensystem zum abnehmbaren Tragen durch einen Benutzer. Die US 2022/0142757 A1 zeigt eine Zahnprothese beinhaltend eine Zahnprothesenbasis auf der künstliche Zähne befestigt sind. Die EP 3 342 370 A1 bezieht sich auf eine Referenzzahnplatte, eine Referenzzahnprothese, ein Zahnprothesenherstellungsset und auf eine Zahnprothesenherstellungsmethode.

Die Aufgabe der vorliegenden Erfindung liegt nun darin, die Originaltreue einer Dentalprothesenbasis weiter zu verbessern, d. h. ein natürlich wirkendes Erscheinungsbild der Dentalprothesenbasis zu erreichen. Mit anderen Worten soll eine Möglichkeit geschaffen werden eine Dentalprothesenbasis herzustellen, deren Erscheinungsbild natürlichem Zahnfleisch möglichst nahekommt.

Die Aufgabe wird durch ein Verfahren zum Bestimmen eines Innenaufbaus einer Dentalprothesenbasis gelöst. Die Dentalprothesenbasis bildet im Wesentlichen Zahnfleisch nach. Das Verfahren umfasst:
- Erhalten von Außenhülledaten, die eine äußere Hülle der Dentalprothesenbasis beschreiben,
- Identifizieren einer Zahnfleischkammlinie der äußeren Hülle der Dentalprothesenbasis oder Erhalten von Zahnfleischkammliniendaten, die die Zahnfleischkammlinie der äußeren Hülle beschreiben,
- Festlegen einer ersten Bezugslinie durch Parallelverschieben der Zahnfleischkammlinie in Richtung eines Inneren der äußeren Hülle um ein erstes Verschiebungsinkrement oder Festlegen der Zahnfleischkammlinie als eine erste Bezugslinie,
- Festlegen eines ersten Bezugspunkts, welcher in einer Verwendungsstellung der Dentalprothesenbasis oberhalb oder unterhalb der Dentalprothesenbasis liegt,
- Festlegen einer ersten Trennfläche als eine Fläche, die alle geraden Linien umfasst, die sich durch den ersten Bezugspunkt und durch die erste Bezugslinie erstrecken, und
- Ableiten wenigstens eines Subvolumens der Dentalprothesenbasis als ein von der ersten Trennfläche und der äußeren Hülle begrenztes Volumen.

Dem erfindungsgemäßen Verfahren liegt die Beobachtung zugrunde, dass natürliches Zahnfleisch hinsichtlich seiner optischen Eigenschaften wie Farbe, Farbhelligkeit und/oder Transluzenz nicht uniform ist. Natürliches Zahnfleisch ist beispielsweise im Bereich der Zahnkanäle heller, da dort das Zahnfleisch dünnwandiger ist, das Zahnfleischgewebe dort häufig weniger stark durchblutet ist und Zähne durchscheinen. Dabei weist das natürliche Zahnfleisch eher weiche Farbverläufe auf, also keine harten Farbsprünge. Basierend hierauf, wurde die Idee entwickelt, ein möglichst naturgetreues Erscheinungsbild einer Dentalprothesenbasis nicht nur durch eine möglichst naturgetreue äußere Hülle zu erreichen, sondern auch den Innenaufbau der Dentalprothesenbasis im Sinne eines möglichst naturgetreuen Erscheinungsbilds zu nutzen. Neben der naturgetreuen Nachbildung der äußeren Hülle soll gemäß der vorliegenden Erfindung also auch ein Innenaufbau der Dentalprothesenbasis derart gewählt werden, dass die Originaltreue der Dentalprothesenbasis insgesamt erhöht wird. Hierfür ist der Gedanke grundlegend, das naturgetreue Erscheinungsbild der Dentalprothesenbasis durch ein Zusammenspiel verschiedener Abschnitte der Dentalprothesenbasis, die unterschiedliche optische Eigenschaften, insbesondere eine unterschiedliche Farbe, eine unterschiedliche Farbhelligkeit und/oder eine unterschiedliche Transluzenz, aufweisen, positiv zu beeinflussen. Die Gesamtheit dieser verschiedenen Abschnitte bildet dabei den Innenaufbau der Dentalprothesenbasis. Dieser Erkenntnis trägt das erfindungsgemäße Verfahren Rechnung, wobei sich mittels dieses Verfahrens ein Innenaufbau der Dentalprothesenbasis bestimmen lässt, der zu einem äußerst naturgetreuen Erscheinungsbild führt. Gleichzeitig ist das erfindungsgemäße Verfahren vergleichsweise einfach und lässt sich insbesondere innerhalb einer CAD-Software oder innerhalb einer CAM-Software leicht umsetzen. Die Verfahrensschritte stellen dabei ein Regelwerk dar, das innerhalb der CAD-Software oder CAM-Software automatisiert umgesetzt werden kann. Als Eingangsdaten werden Außenhülledaten verwendet, die patientenindividuell ermittelt werden können. Beispielsweise basieren die Außenhülledaten um Scandaten, die eine Mundsituation, d.h. ein Inneres des Mundes des Patienten, beschreiben. Derartige Scandaten können mittels eines Intraoralscanners generiert werden. Auf Basis derartiger Scandaten können die Außenhülledaten innerhalb der dentalen CAD-Software modelliert und, sofern nötig oder gewünscht, in der dentalen CAM-Software angepasst werden. Die Außenhülledaten beschreiben dabei die äußere Hülle der Dentalprothesenbasis im virtuellen Raum. Das erfindungsgemäße Verfahren umfasst ferner das Identifizieren einer Zahnfleischkammlinie. In diesem Zusammenhang wird unter einer Zahnfleischkammlinie eine Linie verstanden, die mit Bezug auf eine vorgegebene Dimension oder Richtung die lokal höchsten Punkte der Dentalprothesenbasis verbindet. Dabei entspricht vorliegend die vorgegebene Dimension einer Tiefenrichtung der Zahnkavitäten der Dentalprothesenbasis. Diese Richtung wird in der Dentaltechnik auch als Z-Richtung bezeichnet. Dabei liegt ein Ursprung im Massenschwerpunkt der Dentalprothesenbasis. Die positive Z-Richtung wird parallel zu einer Richtung aus den Zahnkavitäten hinaus definiert. Wie nachfolgend noch im Detail erläutert werden wird, kann dabei die Zahnfleischkammlinie eine labiale Zahnfleischkammlinie oder eine linguale Zahnfleischkammlinie sein. Im ersten Beispiel ist die Zahnfleischkammlinie also diejenige Linie, die die lokal höchsten Punkte der Dentalprothesenbasis auf der labialen Seite der Zahnkavitäten verbindet. Im zweiten Beispiel ist die Zahnfleischkammlinie diejenige Linie, die die lokal höchsten Punkte der Dentalprothesenbasis auf der lingualen Seite der Zahnkavitäten verbindet. Alternativ zum Identifizieren der Zahnfleischkammlinie können auch Zahnfleischkammliniendaten erhalten werden, die die Zahnfleischkammlinie der äußeren Hülle beschreiben. Basierend hierauf lässt sich durch das Parallelverschieben der Zahnfleischkammlinie, das zum Festlegen einer ersten Bezugslinie führt, und durch das Festlegen eines Bezugspunkts auf einfache und zuverlässige Weise eine Trennfläche definieren. Das Parallelverschieben erfolgt dabei in negative Z-Richtung. Alternativ zum Parallelverschieben der Zahnfleischkammlinie kann die Zahnfleischkammlinie als erste Bezugslinie festgelegt werden. Es versteht sich dabei, dass das Festlegen der ersten Bezugslinie, gegebenenfalls das Parallelverschieben, das Festlegen des ersten Bezugspunkts und das Festlegen der ersten Trennfläche im virtuellen Raum erfolgt. Diese Schritte lassen sich vergleichsweise einfach automatisiert in einer CAD-Software oder einer CAM-Software ausführen. Die Trennfläche unterteilt somit die durch die äußere Hülle begrenzte Dentalprothesenbasis in wenigstens zwei Abschnitte. Basierend hierauf kann wenigstens ein Subvolumen als ein von der ersten Trennfläche und der äußeren Hülle begrenztes Volumen abgeleitet werden. Ebenso ist es möglich, zwei Subvolumina abzuleiten, die jeweils durch die erste Trennfläche und durch diesseits und jenseits der ersten Trennfläche liegende Abschnitte der äußeren Hülle begrenzt werden. Es versteht sich dabei, dass die Begrenzung der Subvolumina durch die erste Trennfläche und die äußere Hülle nicht abschließend zu verstehen ist, d.h. die Subvolumina können auch durch weitere Elemente begrenzt sein. Das Subvolumen oder die Subvolumina bilden den Innenaufbau der Dentalprothesenbasis. Den Subvolumina werden Materialien mit unterschiedlichen optischen Eigenschaften zugeordnet. Auf diese Weise wird der Dentalprothesenbasis ein natürliches Erscheinungsbild verliehen.

Die im Zuge des erfindungsgemäßen Verfahrens festgelegte erste Trennfläche verläuft zudem bei einer Betrachtung entlang einer Kieferbogenlinie schräg, d.h. in einer Verwendungsstellung der Dentalprothesenbasis weder horizontal noch vertikal. Das führt dazu, dass bei einer Betrachtung der Dentalprothesenbasis senkrecht zur Kieferbogenlinie Abschnitte der Dentalprothesenbasis, die von der ersten Trennfläche separiert werden, hintereinanderliegen. Setzt man eine gewisse Transluzenz zumindest des in Blickrichtung vorne liegenden Abschnitts voraus, scheint also der in Blickrichtung hinten liegende Abschnitt zumindest zu einem gewissen Grad durch den vorne liegenden Abschnitt hindurch. Auch das trägt zu einem natürlichen Erscheinungsbild der Dentalprothesenbasis bei.

Im Zusammenhang mit derjenigen Variante der vorliegenden Erfindung, in der die Zahnfleischkammlinie parallelverschoben wird, ist das erste Verschiebungsinkrement stets größer als 0 mm. Zudem kann das erste Verschiebungsinkrement kleiner sein als eine maximale Höhe der Dentalprothesenbasis. Bevorzugt beträgt das erste Verschiebungsinkrement weniger Millimeter. Zum Beispiel beträgt das erste Verschiebungsinkrement 2 bis 15 mm. Bevorzugt beträgt das erste Verschiebungsinkrement 2 bis 10 mm. Je nach Anwendungsfall kann das erste Verschiebungsinkrement also beispielsweise 3, 4 oder 5 mm betragen.

Das erfindungsgemäße Verfahren wird insbesondere automatisiert, teilautomatisiert und/oder computergestützt ausgeführt. Das bedeutet, dass sich der Innenaufbau im Wesentlichen ohne menschliches Zutun bestimmen lässt. In diesem Zusammenhang ist eine Eingabe der Verschiebungsinkremente oder eine Zuordnung eines Materials, einer Farbe, einer Farbhelligkeit und/oder Transluzenz nicht nötig. Die Verfahrensschritte stellen ein Regelwerk dar, das computergestützt abgearbeitet wird. Das erfindungsgemäße Verfahren zum Bestimmen eines Innenaufbaus einer Dentalprothesenbasis ist somit ein computerimplementiertes Verfahren.

Es versteht sich, dass im Zusammenhang mit dem erfindungsgemäßen Verfahren Begriffe wie "erster" und "zweiter" lediglich der einfachen Erläuterung dienen und keine Mengen oder Anzahlen implizieren.

Es versteht sich, dass das erfindungsgemäße Verfahren sowohl für Teilprothesen als auch für Totalprothesen genutzt werden kann, die eine Dentalprothesenbasis umfassen.

Das Verfahren kann ferner umfassen:
- Festlegen einer zweiten Bezugslinie durch Parallelverschieben der Zahnfleischkammlinie in Richtung eines Inneren der äußeren Hülle um ein zweites Verschiebungsinkrement, wobei das erste Verschiebungsinkrement und das zweite Verschiebungsinkrement unterschiedlich sind,
- Festlegen einer zweiten Trennfläche als eine Fläche, die alle geraden Linien umfasst, die sich durch den ersten Bezugspunkt und durch die zweite Bezugslinie erstrecken, und
- Ableiten wenigstens eines Subvolumens der Dentalprothesenbasis als ein von der zweiten Trennfläche und der äußeren Hülle begrenztes Volumen.

In dieser Variante wird also eine zweite Bezugslinie durch Parallelverschieben der Zahnfleischkammlinie um ein zweites Verschiebungsinkrement festgelegt. Damit können insgesamt zwei Trennflächen festgelegt werden, wofür derselbe Bezugspunkt, nämlich der erste Bezugspunkt, verwendet wird. Mittels der beiden Trennflächen, d.h. der ersten Trennfläche und der zweiten Trennfläche, lässt sich die äußere Hülle der Dentalprothesenbasis insgesamt in drei Abschnitte unterteilen. Basierend hierauf kann wenigstens ein Subvolumen abgeleitet werden. Auch ist es möglich, insgesamt drei Subvolumina abzuleiten, wobei ein erstes Subvolumen von der äußeren Hülle und der ersten Trennfläche begrenzt ist und auf einer der zweiten Trennfläche abgewandten Seite der ersten Trennfläche liegt. Ein zweites Subvolumen kann von der äußeren Hülle und der zweiten Trennfläche begrenzt sein und auf einer der ersten Trennfläche abgewandten Seite der zweiten Trennfläche liegen. Ein drittes Subvolumen kann von der ersten Trennfläche, von der zweiten Trennfläche und von der äußeren Hülle begrenzt sein. Dabei liegt das dritte Subvolumen auf einer der ersten Trennfläche zugewandten Seite der zweiten Trennfläche sowie auf einer der zweiten Trennfläche zugewandten Seite der ersten Trennfläche. Diese drei Subvolumina schneiden sich nicht. Es versteht sich, dass unter Nutzung der ersten Trennfläche, der zweiten Trennfläche und der äußeren Hülle selbstverständlich auch andere Subvolumina abgeleitet werden können. Somit kann ein feingliedriger Innenaufbau der Dentalprothesenbasis bestimmt werden. Wieder können den Subvolumina Materialien mit unterschiedlichen optischen Eigenschaften zugeordnet werden. Auf diese Weise wird der Dentalprothesenbasis ein besonders natürliches Erscheinungsbild verliehen.

Im Zusammenhang mit der vorliegenden Erfindung ist das zweite Verschiebungsinkrement stets größer als 0 mm. Zudem kann das zweite Verschiebungsinkrement kleiner sein als eine maximale Höhe der Dentalprothesenbasis. Bevorzugt beträgt das zweite Verschiebungsinkrement wenige Millimeter. Zum Beispiel beträgt das zweite Verschiebungsinkrement 2 bis 10 mm. Je nach Anwendungsfall kann das zweite Verschiebungsinkrement also beispielsweise 2, 3, 4 oder 5 mm betragen.

Vorzugsweise ist das zweite Verschiebungsinkrement hinsichtlich seiner Größe vom ersten Verschiebungsinkrement verschieden. Das zweite Verschiebungsinkrement kann somit auch über eine Differenz oder ein Delta zum ersten Verschiebungsinkrement festgelegt werden oder umgekehrt. Die Differenz beträgt dabei 2 mm bis 10 mm, bevorzugt 2 mm bis 5 mm.

Alternativ kann das Verfahren ferner umfassen:
- Festlegen einer zweiten Bezugslinie durch Parallelverschieben der Zahnfleischkammlinie in Richtung eines Inneren der äußeren Hülle um ein zweites Verschiebungsinkrement, wobei das erste Verschiebungsinkrement und das zweite Verschiebungsinkrement unterschiedlich sind,
- Festlegen eines zweiten Bezugspunkts, welcher in einer Verwendungsstellung der Dentalprothesenbasis oberhalb oder unterhalb der Dentalprothesenbasis liegt, wobei der erste Bezugspunkt und der zweite Bezugspunkt unterschiedlich sind,
- Festlegen einer zweiten Trennfläche als eine Fläche, die alle geraden Linien umfasst, die sich durch den zweiten Bezugspunkt und durch die zweite Bezugslinie erstrecken, und
- Ableiten wenigstens eines Subvolumens der Dentalprothesenbasis als ein von der zweiten Trennfläche und der äußeren Hülle begrenztes Volumen.

In dieser Variante wird also eine zweite Bezugslinie durch Parallelverschieben der Zahnfleischkammlinie um ein zweites Verschiebungsinkrement sowie durch Festlegen eines zweiten Bezugspunkts festgelegt. Damit können wieder insgesamt zwei Trennflächen festgelegt werden, wofür nun jedoch unterschiedliche Bezugspunkte, nämlich der erste Bezugspunkt und der zweite Bezugspunkt, verwendet werden. Mittels der beiden Trennflächen, d.h. der ersten Trennfläche und der zweiten Trennfläche, lässt sich die äußere Hülle der Dentalprothesenbasis insgesamt in drei Abschnitte unterteilen. Basierend hierauf kann wenigstens ein Subvolumen abgeleitet werden. Auch ist es möglich, insgesamt drei Subvolumina abzuleiten, wobei ein erstes Subvolumen von der äußeren Hülle und der ersten Trennfläche begrenzt ist und auf einer der zweiten Trennfläche abgewandten Seite der ersten Trennfläche liegt. Ein zweites Subvolumen kann von der äußeren Hülle und der zweiten Trennfläche begrenzt sein und auf einer der ersten Trennfläche abgewandten Seite der zweiten Trennfläche liegen. Ein drittes Subvolumen kann von der ersten Trennfläche, von der zweiten Trennfläche und von der äußeren Hülle begrenzt sein. Dabei liegt das dritte Subvolumen auf einer der ersten Trennfläche zugewandten Seite der zweiten Trennfläche sowie auf einer der zweiten Trennfläche zugewandten Seite der ersten Trennfläche. Diese drei Subvolumina schneiden sich nicht. Es versteht sich, dass unter Nutzung der ersten Trennfläche, der zweiten Trennfläche und der äußeren Hülle selbstverständlich auch andere Subvolumina abgeleitet werden können. Somit kann ein feingliedriger Innenaufbau der Dentalprothesenbasis bestimmt werden. Wieder können den Subvolumina Materialien mit unterschiedlichen optischen Eigenschaften zugeordnet werden. Auf diese Weise wird der Dentalprothesenbasis ein besonders natürliches Erscheinungsbild verliehen.

Wie bisher beträgt das zweite Verschiebungsinkrement bevorzugt weniger Millimeter. Zum Beispiel beträgt das zweite Verschiebungsinkrement 2 bis 10 mm. Je nach Anwendungsfall kann das zweite Verschiebungsinkrement also beispielsweise 2, 3, 4 oder 5 mm betragen. Das zweite Verschiebungsinkrement kann auch über eine Differenz oder ein Delta zum ersten Verschiebungsinkrement festgelegt werden. Die Differenz beträgt dabei beispielsweise 2 mm bis 10 mm, bevorzugt 2 mm bis 5 mm. Wie bereits erwähnt, sind das erste Verschiebungsinkrement und das zweite Verschiebungsinkrement unterschiedlich.

Die Zahnfleischkammlinie kann eine labiale Zahnfleischkammlinie oder eine linguale Zahnfleischkammlinie sein. Die Zahnfleischkammlinie kann also diejenige Linie sein, die die lokal höchsten Punkte der Dentalprothesenbasis auf der labialen Seite der Zahnkavitäten verbindet. Alternativ kann die Zahnfleischkammlinie diejenige Linie sein, die die lokal höchsten Punkte der Dentalprothesenbasis auf der lingualen Seite der Zahnkavitäten verbindet. Das erfindungsgemäße Verfahren, insbesondere die beiden vorgenannten Varianten, lässt sich sowohl unter Nutzung der labialen Zahnfleischkammlinie als auch unter Nutzung der eine lingualen Zahnfleischkammlinie ausführen. Es lassen sich somit auf einfache Art und Weise Subvolumina der Dentalprothesenbasis bestimmen, die ein naturgetreues Erscheinungsbild derselben begünstigen.

In einer Ausführungsform umfasst das Identifizieren der Zahnfleischkammlinie das Identifizieren einer labialen Zahnfleischkammlinie der äußeren Hülle der Dentalprothesenbasis oder das Erhalten von labialen Zahnfleischkammliniendaten, die die labiale Zahnfleischkammlinie der äußeren Hülle beschreiben. Zudem umfasst das Identifizieren der Zahnfleischkammlinie das Identifizieren einer lingualen Zahnfleischkammlinie der äußeren Hülle der Dentalprothesenbasis oder das Erhalten von lingualen Zahnfleischkammliniendaten, die die linguale Zahnfleischkammlinie der äußeren Hülle beschreiben. Außerdem wird die erste Bezugslinie durch Parallelverschieben der labialen Zahnfleischkammlinie in Richtung eines Inneren der äußeren Hülle um das erste Verschiebungsinkrement festgelegt. Alternativ wird die labiale Zahnfleischkammlinie als die erste Bezugslinie festgelegt. Ferner umfasst das Verfahren:
- Festlegen einer zweiten Bezugslinie durch Parallelverschieben der lingualen Zahnfleischkammlinie in Richtung eines Inneren der äußeren Hülle um ein zweites Verschiebungsinkrement oder Festlegen der lingualen Zahnfleischkammlinie als eine zweite Bezugslinie,
- Festlegen einer zweiten Trennfläche als eine Fläche, die alle geraden Linien umfasst, die sich durch den ersten Bezugspunkt und durch die zweite Bezugslinie erstrecken, und
- Ableiten wenigstens eines Subvolumens der Dentalprothesenbasis als ein von der zweiten Trennfläche und der äußeren Hülle begrenztes Volumen.

In dieser Variante werden also zwei verschiedene Zahnfleischkammlinien verwendet, nämlich die labiale Zahnfleischkammlinie und die linguale Zahnfleischkammlinie. Basierend hierauf werden zwei Bezugslinien festgelegt, nämlich die erste Bezugslinie und die zweite Bezugslinie. Unter Nutzung eines gemeinsamen Bezugspunkts, hier des ersten Bezugspunkts, lassen sich folglich zwei Trennflächen festlegen, die hier als erste Trennfläche und zweite Trennfläche bezeichnet sind. Mittels der beiden Trennflächen, lässt sich die äußere Hülle der Dentalprothesenbasis insgesamt in drei Abschnitte unterteilen. Basierend hierauf kann wenigstens ein Subvolumen abgeleitet werden. Auch ist es möglich, insgesamt drei Subvolumina abzuleiten, wobei ein erstes Subvolumen von der äußeren Hülle und der ersten Trennfläche begrenzt ist und auf einer der zweiten Trennfläche abgewandten Seite der ersten Trennfläche liegt. Ein zweites Subvolumen kann von der äußeren Hülle und der zweiten Trennfläche begrenzt sein und auf einer der ersten Trennfläche abgewandten Seite der zweiten Trennfläche liegen. Ein drittes Subvolumen kann von der ersten Trennfläche, von der zweiten Trennfläche und von der äußeren Hülle begrenzt sein. Dabei liegt das dritte Subvolumen auf einer der ersten Trennfläche zugewandten Seite der zweiten Trennfläche sowie auf einer der zweiten Trennfläche zugewandten Seite der ersten Trennfläche. Diese drei Subvolumina schneiden sich nicht. Es versteht sich, dass unter Nutzung der ersten Trennfläche, der zweiten Trennfläche und der äußeren Hülle selbstverständlich auch andere Subvolumina abgeleitet werden können. Somit kann ein feingliedriger Innenaufbau der Dentalprothesenbasis bestimmt werden. Wieder können den Subvolumina Materialien mit unterschiedlichen optischen Eigenschaften zugeordnet werden. Auf diese Weise wird der Dentalprothesenbasis ein besonders natürliches Erscheinungsbild verliehen.

Gemäß einer Alternative umfasst das Identifizieren der Zahnfleischkammlinie das Identifizieren einer labialen Zahnfleischkammlinie der äußeren Hülle der Dentalprothesenbasis oder das Erhalten von labialen Zahnfleischkammliniendaten, die die labiale Zahnfleischkammlinie der äußeren Hülle beschreiben. Außerdem umfasst das Identifizieren der Zahnfleischkammlinie das Identifizieren einer lingualen Zahnfleischkammlinie der äußeren Hülle der Dentalprothesenbasis oder das Erhalten von lingualen Zahnfleischkammliniendaten, die die linguale Zahnfleischkammlinie der äußeren Hülle beschreiben. Zudem wird die erste Bezugslinie durch Parallelverschieben der labialen Zahnfleischkammlinie in Richtung eines Inneren der äußeren Hülle um das erste Verschiebungsinkrement festgelegt. Alternativ wird die labiale Zahnfleischkammlinie als die erste Bezugslinie festgelegt. Das Verfahren umfasst ferner:
- Festlegen einer zweiten Bezugslinie durch Parallelverschieben der lingualen Zahnfleischkammlinie in Richtung eines Inneren der äußeren Hülle um ein zweites Verschiebungsinkrement oder Festlegen der lingualen Zahnfleischkammlinie als eine zweite Bezugslinie,
- Festlegen eines zweiten Bezugspunkts, welcher in einer Verwendungsstellung der Dentalprothesenbasis oberhalb oder unterhalb der Dentalprothesenbasis liegt, wobei der erste Bezugspunkt und der zweite Bezugspunkt auf entgegengesetzten Seiten der Dentalprothesenbasis liegen,
- Festlegen einer zweiten Trennfläche als eine Fläche, die alle geraden Linien umfasst, die sich durch den zweiten Bezugspunkt und durch die zweite Bezugslinie erstrecken, und
- Ableiten wenigstens eines Subvolumens der Dentalprothesenbasis als ein von der zweiten Trennfläche und der äußeren Hülle begrenztes Volumen.

In dieser Variante werden also wieder zwei verschiedene Zahnfleischkammlinien verwendet, nämlich die labiale Zahnfleischkammlinie und die linguale Zahnfleischkammlinie. Basierend hierauf werden zwei Bezugslinien festgelegt, nämlich die erste Bezugslinie und die zweite Bezugslinie. Ferner werden nun zwei unterschiedliche Bezugspunkte genutzt, der erste Bezugspunkt und der zweite Bezugspunkt. Damit lassen sich zwei Trennflächen festlegen, die hier als erste Trennfläche und zweite Trennfläche bezeichnet sind. Mittels der beiden Trennflächen, lässt sich die äußere Hülle der Dentalprothesenbasis insgesamt in drei Abschnitte unterteilen. Basierend hierauf kann wenigstens ein Subvolumen abgeleitet werden. Auch ist es möglich, insgesamt drei Subvolumina abzuleiten, wobei ein erstes Subvolumen von der äußeren Hülle und der erste Trennfläche begrenzt ist und auf einer der zweiten Trennfläche abgewandten Seite der ersten Trennfläche liegt. Ein zweites Subvolumen kann von der äußeren Hülle und der zweiten Trennfläche begrenzt sein und auf einer der ersten Trennfläche abgewandten Seite der zweiten Trennfläche liegen. Ein drittes Subvolumen kann von der ersten Trennfläche, von der zweiten Trennfläche und von der äußeren Hülle begrenzt sein. Dabei liegt das dritte Subvolumen auf einer der ersten Trennfläche zugewandten Seite der zweiten Trennfläche sowie auf einer der zweiten Trennfläche zugewandten Seite der ersten Trennfläche. Diese drei Subvolumina schneiden sich nicht. Es versteht sich, dass unter Nutzung der ersten Trennfläche, der zweiten Trennfläche und der äußeren Hülle selbstverständlich auch andere Subvolumina abgeleitet werden können. Somit kann ein feingliedriger Innenaufbau der Dentalprothesenbasis bestimmt werden. Wieder können den Subvolumina Materialien mit unterschiedlichen optischen Eigenschaften zugeordnet werden. Auf diese Weise wird der Dentalprothesenbasis ein besonders natürliches Erscheinungsbild verliehen.

Gemäß einer Ausführungsform liegt der erste Bezugspunkt in einer Verwendungsstellung der Dentalprothesenbasis unterhalb der Dentalprothesenbasis und der zweite Bezugspunkt in einer Verwendungsstellung der Dentalprothesenbasis oberhalb der Dentalprothesenbasis. Alternativ liegt der erste Bezugspunkt in einer Verwendungsstellung der Dentalprothesenbasis oberhalb der Dentalprothesenbasis und der zweite Bezugspunkt in einer Verwendungsstellung der Dentalprothesenbasis unterhalb der Dentalprothesenbasis. In diesem Zusammenhang kann der Bereich oberhalb der Dentalprothesenbasis durch einen positiven Bereich einer Z-Achse der Dentalprothesenbasis definiert werden. Wie bereits erläutert, ist dabei die Z-Achse durch eine Tiefenrichtung der Zahnkavitäten der Dentalprothesenbasis definiert. Dementsprechend ist der Bereich unterhalb der Dentalprothesenbasis durch einen negativen Bereich der Z-Achse der Dentalprothesenbasis definiert. Darüber hinaus sind der Bereich oberhalb und unterhalb der Dentalprothesenbasis jeweils durch einen äußeren Umfang der Dentalprothesenbasis beschränkt. Das bedeutet, dass bei einer Betrachtung entlang einer Richtung, die entgegengesetzt zur positiven Z-Achse verläuft, einer der Bezugspunkte hinter der Dentalprothesenbasis liegt. Bildlich gesprochen ist somit dieser Bezugspunkt durch die Dentalprothesenbasis verdeckt. In gleicher Weise liegt der jeweils andere Bezugspunkt bei einer Betrachtung entlang einer Richtung, die der positiven Z-Achse entspricht, hinter der Dentalprothesenbasis. Bildlich gesprochen ist folglich dieser Bezugspunkt durch die Dentalprothesenbasis verdeckt. Es hat sich herausgestellt, dass derart definierte Bezugspunkte besonders gut dafür geeignet sind, Trennflächen zu definieren, mittels der Subvolumina bestimmt werden, welche zu einem naturgetreuen Erscheinungsbild der Dentalprothesenbasis führen.

Das Parallelverschieben kann entlang einer Richtung erfolgen, die in einer Verwendungsstellung der Dentalprothesenbasis vertikal verläuft. Diese Richtung kann mit der Richtung der Z-Achse zusammenfallen. Das Parallelverschieben erfolgt dann entlang der Z-Achse, bevorzugt entgegen der positiven Z-Richtung. Es hat sich herausgestellt, dass derart definierte Bezugslinien besonders gut dafür geeignet sind, Trennflächen zu definieren, mittels der Subvolumina bestimmt werden, welche zu einem naturgetreuen Erscheinungsbild der Dentalprothesenbasis führen.

Vorzugsweise liegt der erste Bezugspunkt und/oder der zweite Bezugspunkt auf einer Vertikalen durch einen Massenschwerpunkt der äußeren Hülle der Dentalprothesenbasis. Alternativ liegt der erste Bezugspunkt und/oder der zweite Bezugspunkt auf einer Vertikalen durch einen Massenschwerpunkt einer Bounding Box der äußeren Hülle der Dentalprothesenbasis. Für den Fall, dass innerhalb der äußeren Hülle eine Dichte der Dentalprothesenbasis konstant ist, fällt der Massenschwerpunkt mit einem Volumenschwerpunkt zusammen. Dasselbe gilt, wenn keine Informationen hinsichtlich einer Dichte der Dentalprothesenbasis vorliegen. Unter einer Bounding Box wird ein virtueller Quader verstanden, der um die äußere Hülle der Dentalprothesenbasis gelegt wird und gerade so groß ist, dass die äußere Hülle darin Platz findet. Dabei sind bevorzugt die Kanten der Bounding Box parallel zu den Achsen eines Koordinatensystems der Dentalprothesenbasis orientiert. Es hat sich herausgestellt, dass derart definierte Bezugspunkte besonders gut dafür geeignet sind, Trennflächen zu definieren, mittels der Subvolumina bestimmt werden, welche zu einem naturgetreuen Erscheinungsbild der Dentalprothesenbasis führen.

Gemäß einer Variante kann das Verfahren ferner umfassen:
- Zuordnen einer Materialinformation, einer Farbinformation, einer Farbhelligkeitsinformation und/oder einer Transluzenzinformation zu demjenigen Subvolumen, das die Zahnfleischkammlinie umfasst, und
- Zuordnen einer Materialinformation, einer Farbinformation, einer Farbhelligkeitsinformation und/oder einer Transluzenzinformation zu einem Subvolumen, das von der Zahnfleischkammlinie separat ist, wobei sich das Subvolumen, das die Zahnfleischkammlinie umfasst, und das Subvolumen, das von der Zahnfleischkammlinie separat ist, in wenigstens einer aus Materialinformation, Farbinformation, Farbhelligkeitsinformation und Transluzenzinformation unterscheiden.

Das bedeutet, dass jedem der Subvolumina eine Materialinformation, eine Farbinformation, eine Farbhelligkeitsinformation und/oder eine Transluzenzinformation zugeordnet werden kann. Auf diese Weise wird der Innenaufbau der Dentalprothesenbasis näher definiert. Die Tatsache, dass sich das Subvolumen, das die Zahnfleischkammlinie umfasst, und das Subvolumen, das von der Zahnfleischkammlinie separat ist, in wenigstens einer aus Materialinformation, Farbinformation, Farbhelligkeitsinformation und Transluzenzinformation unterscheiden, bewirkt dabei ein naturgetreues Erscheinungsbild der Dentalprothesenbasis. Insgesamt lässt sich auf diese Weise ein Innenaufbau der Dentalprothesenbasis im Detail definieren, sodass die Dentalprothesenbasis ein naturgetreues Erscheinungsbild aufweist.

Auch wird die Aufgabe durch ein Verfahren zur Herstellung einer Dentalprothesenbasis mit einer vorgegebenen äußeren Hülle gelöst. Das Verfahren umfasst:
- Bestimmen eines Innenaufbaus der Dentalprothesenbasis mit wenigstens einem Subvolumen mittels des erfindungsgemäßen Verfahrens zum Bestimmen eines Innenaufbaus einer Dentalprothesenbasis, und
- Fertigen der Dentalprothesenbasis mit dem bestimmten Innenaufbau mittels Werkstoffen, die sich in wenigstens einem ausgewählt aus Material, Farbe, Farbhelligkeit und Transluzenz unterscheiden.

Es werden also hinsichtlich Material, Farbe, Farbhelligkeit und/oder Transluzenz unterschiedliche Werkstoffe zum Fertigen des Innenaufbaus der Dentalprothesenbasis verwendet. Eine derartige Dentalprothesenbasis zeichnet sich durch ein äußerst naturgetreues Erscheinungsbild aus. Gleichzeitig ist das erfindungsgemäße Verfahren vergleichsweise einfach und lässt sich insbesondere innerhalb eines CAD-CAM-Workflows leicht umsetzen.

Außerdem wird die Aufgabe durch eine Dentalprothesenbasis gelöst. Die Dentalprothesenbasis hat eine äußere Hülle und einen Innenaufbau, wobei der Innenaufbau mittels des erfindungsgemäßen Verfahrens zum Bestimmen eines Innenaufbaus einer Dentalprothesenbasis bestimmt ist. Dabei können den Subvolumina des Innenaufbaus Materialien mit unterschiedlichen optischen Eigenschaften zugeordnet werden und die Subvolumina aus Materialien mit unterschiedlichen optischen Eigenschaften hergestellt werden. Auf diese Weise wird der Dentalprothesenbasis ein natürliches Erscheinungsbild verliehen.

Zudem wir die Aufgabe durch eine Vorrichtung zur Datenverarbeitung gelöst. Die Vorrichtung zur Datenverarbeitung umfasst Mittel zur Ausführung des erfindungsgemäßen Verfahrens zum Bestimmen eines Innenaufbaus einer Dentalprothesenbasis. Mittels einer derartigen Vorrichtung zur Datenverarbeitung lässt sich also ein Innenaufbau der Dentalprothesenbasis bestimmen, der wenigstens ein Subvolumen umfasst. Bevorzugt umfasst der Innenaufbau wenigstens zwei Subvolumina. Diesen Subvolumina können Materialien mit unterschiedlichen optischen Eigenschaften zugeordnet werden. Auf diese Weise wird der Dentalprothesenbasis ein natürliches Erscheinungsbild verliehen.

Auch wird die Aufgabe durch ein Computerprogramm gelöst. Das Computerprogramm umfasst Befehle, die bei der Ausführung des Computerprogramms durch einen Computer diesen veranlassen, das erfindungsgemäße Verfahren zum Bestimmen eines Innenaufbaus einer Dentalprothesenbasis auszuführen. Durch Nutzung eines solchen Computerprogramms lässt sich also ein Innenaufbau der Dentalprothesenbasis bestimmen, der wenigstens ein Subvolumen umfasst. Bevorzugt umfasst der Innenaufbau wenigstens zwei Subvolumina. Diesen Subvolumina können Materialien mit unterschiedlichen optischen Eigenschaften zugeordnet werden. Auf diese Weise wird der Dentalprothesenbasis ein natürliches Erscheinungsbild verliehen.

Ferner wird die Aufgabe durch ein computerlesbares Medium gelöst. Das computerlesbare Medium umfasst Befehle, die bei der Ausführung durch einen Computer diesen veranlassen, das erfindungsgemäße Verfahren auszuführen. Mittels eines derartigen Computerlesbaren Mediums lässt sich also ein Innenaufbau der Dentalprothesenbasis bestimmen, der wenigstens ein Subvolumen umfasst. Bevorzugt umfasst der Innenaufbau wenigstens zwei Subvolumina. Diesen Subvolumina können Materialien mit unterschiedlichen optischen Eigenschaften zugeordnet werden. Auf diese Weise wird der Dentalprothesenbasis ein natürliches Erscheinungsbild verliehen.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Vorrichtung zur Datenverarbeitung mit einem erfindungsgemäßen computerlesbaren Medium und einem erfindungsgemäßen Computerprogramm, wobei die Vorrichtung zur Datenverarbeitung dazu ausgebildet ist, ein erfindungsgemäßes Verfahren zum Bestimmen eines Innenaufbaus einer Dentalprothesenbasis auszuführen und wobei die Vorrichtung zur Datenverarbeitung mit einer Herstellungsvorrichtung gekoppelt ist, sodass sich eine erfindungsgemäße Dentalprothesenbasis unter Nutzung eines erfindungsgemäßen Verfahren zur Herstellung einer Dentalprothesenbasis herstellen lässt,
- Figur 2: eine Visualisierung von Außenhülledaten einer Dentalprothesenbasis gemäß einer ersten Ausführungsform in einer Ansicht entlang einer Richtung II aus Figur 3, wobei zudem Elemente des Verfahrens zum Bestimmen eines Innenaufbaus einer Dentalprothesenbasis dargestellt sind,
- Figur 3: eine Visualisierung der Außenhülledaten aus Figur 3 in einer Ansicht entlang einer Richtung III aus Figur 2, wobei zudem Elemente des Verfahrens zum Bestimmen eines Innenaufbaus einer Dentalprothesenbasis dargestellt sind,
- Figur 4: die erfindungsgemäße Dentalprothesenbasis gemäß der ersten Ausführungsform in einer Schnittansicht, die einer Ansicht in der Ebene IV-IV in der Figur 3 entspricht, wobei zudem Elemente des Verfahrens zum Bestimmen eines Innenaufbaus der Dentalprothesenbasis dargestellt sind,
- Figur 5: eine Visualisierung von Außenhülledaten einer Dentalprothesenbasis gemäß einer zweiten Ausführungsform in einer Ansicht entlang einer Richtung V aus Figur 6, wobei zudem Elemente des Verfahrens zum Bestimmen eines Innenaufbaus einer Dentalprothesenbasis dargestellt sind,
- Figur 6: eine Visualisierung der Außenhülledaten aus Figur 5 in einer Ansicht entlang einer Richtung VI aus Figur 5, wobei zudem Elemente des Verfahrens zum Bestimmen eines Innenaufbaus einer Dentalprothesenbasis dargestellt sind,
- Figur 7: die erfindungsgemäße Dentalprothesenbasis gemäß der zweiten Ausführungsform in einer Schnittansicht, die einer Ansicht in der Ebene VII-VII in der Figur 6 entspricht, wobei zudem Elemente des Verfahrens zum Bestimmen eines Innenaufbaus der Dentalprothesenbasis dargestellt sind,
- Figur 8: die erfindungsgemäße Dentalprothesenbasis aus Figur 7 in einer Schnittansicht, die einer Ansicht in der Ebene VIII-VIII in der Figur 5 entspricht, wobei zudem Elemente des Verfahrens zum Bestimmen eines Innenaufbaus der Dentalprothesenbasis dargestellt sind,
- Figur 9: eine erfindungsgemäße Dentalprothesenbasis gemäß einer dritten Ausführungsform in einer Schnittansicht, die den Ansichten aus den Figuren 4 und 7 entspricht, wobei zudem Elemente des Verfahrens zum Bestimmen eines Innenaufbaus der Dentalprothesenbasis dargestellt sind,
- Figur 10: eine erfindungsgemäße Dentalprothesenbasis gemäß einer vierten Ausführungsform in einer Schnittansicht, die den Ansichten aus den Figuren 4, 7 und 9 entspricht, wobei zudem Elemente des Verfahrens zum Bestimmen eines Innenaufbaus der Dentalprothesenbasis dargestellt sind, und
- Figur 11: eine erfindungsgemäße Dentalprothesenbasis gemäß einer fünften Ausführungsform in einer Schnittansicht, die den Ansichten aus den Figuren 4, 7, 9 und 10 entspricht, wobei zudem Elemente des Verfahrens zum Bestimmen eines Innenaufbaus der Dentalprothesenbasis dargestellt sind.

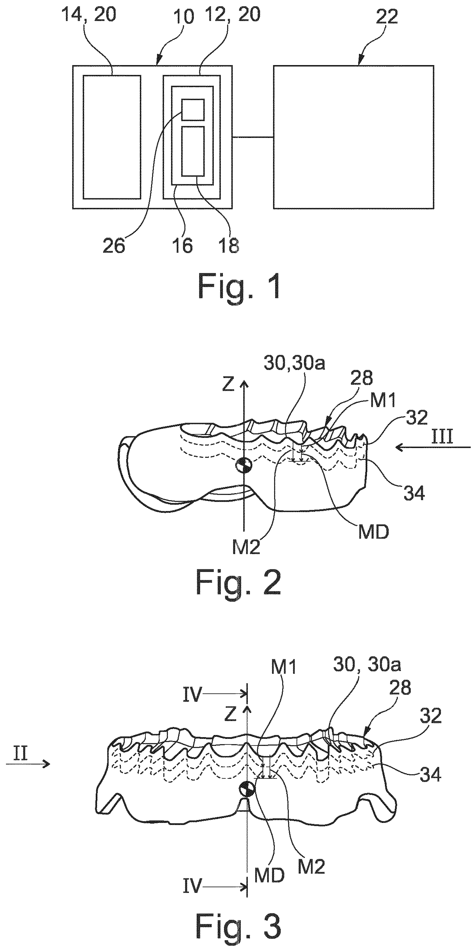

Figur 1 zeigt eine Vorrichtung 10 zur Datenverarbeitung.

Diese umfasst eine Speichereinheit 12 und eine Recheneinheit 14.

Dabei weist die Speichereinheit 12 ein computerlesbares Medium 16 auf.

Auf dem computerlesbaren Medium 16, d. h. auch auf der Speichereinheit 12, ist ein Computerprogramm 18 gespeichert.

Das Computerprogramm 18 und somit auch das computerlesbare Medium 16 umfassen Befehle, die bei der Ausführung des Computerprogramms 18 durch die Recheneinheit 14 oder, allgemeiner gesprochen, durch einen Computer, die Recheneinheit 14 oder den Computer dazu veranlassen, ein Verfahren zum Bestimmen eines Innenaufbaus einer Dentalprothesenbasis auszuführen.

Folglich stellen die Speichereinheit 12 und die Recheneinheit 14 Mittel 20 zum Ausführen des Verfahrens zum Bestimmen eines Innenaufbaus einer Dentalprothesenbasis dar.

Im Beispiel der Figur 1 ist die Vorrichtung 10 zur Datenverarbeitung ferner kommunikationstechnisch mit einer Herstellungsvorrichtung 22 gekoppelt. Dabei ist die Herstellungsvorrichtung 22 dazu ausgebildet, eine Dentalprothesenbasis 24 zu produzieren, die einen Innenaufbau aufweist, welcher mittels des Verfahrens zum Bestimmen des Innenaufbaus der Dentalprothesenbasis 24 bestimmt wurde.

Aus diesem Grund umfasst die Speichereinheit 12 im dargestellten Ausführungsbeispiel zusätzlich ein Computerprogramm 26 zum Ansteuern der Herstellungsvorrichtung 22. Mit anderen Worten umfasst das Computerprogramm 26 Befehle, die bei der Ausführung des Computerprogramms 26 durch die Recheneinheit 14 oder, allgemeiner gesprochen, durch einen Computer, die Recheneinheit 14 oder den Computer dazu veranlassen, die Herstellungsvorrichtung 22 zu steuern.

Im Beispiel der Figur 1 ist die Herstellungsvorrichtung 22 dazu ausgebildet, die Dentalprothesenbasis 24 additiv oder generativ herzustellen. Vereinfacht gesagt kann daher die Herstellungsvorrichtung 22 als 3D-Drucker bezeichnet werden.

Im Folgenden wird das Verfahren zur Herstellung der Dentalprothesenbasis 24 anhand der Figuren 2 bis 4 im Detail erläutert. Dabei ist das Verfahren gemäß einer ersten Ausführungsform ausgeprägt. Die Dentalprothesenbasis 24, die aus der Anwendung des Verfahrens resultiert, ist ebenfalls gemäß einer ersten Ausführungsform ausgeprägt.

Das Verfahren umfasst zunächst das Bestimmen eines Innenaufbaus der Dentalprothesenbasis 24. Hierfür wird ein Verfahren zum Bestimmen eines Innenaufbaus einer Dentalprothesenbasis 24 verwendet. Auch dieses Verfahrens ist gemäß einer ersten Ausführungsform ausgeprägt.

Ein erster Schritt S1 des Verfahrens zum Bestimmen eines Innenausbaus der Dentalprothesenbasis 24 umfasst das Erhalten von Außenhülledaten, die eine äußere Hülle 28 der Dentalprothesenbasis 24 beschreiben. Ein Beispiel für eine äußere Hülle 28 der Dentalprothesenbasis 24 ist dabei in den Figuren 2 und 3 grafisch repräsentiert.

Die Außenhülledaten können ein Koordinatensystem umfassen, das zur näheren Beschreibung der Außenhülledaten verwendet werden kann.

Bei einem derartigen Koordinatensystem kann der Ursprung in einen Massen- oder Volumenschwerpunkt der äußeren Hülle 28 gelegt werden. Nachdem im vorliegenden Beispiel keine Informationen zu einer Massen- oder Dichteverteilung innerhalb der äußeren Hülle 28 vorliegen, fallen der Massenschwerpunkt und der Volumenschwerpunkt der äußeren Hülle 28 zusammen.

Ferner wird eine Z Richtung des Koordinatensystems derart definiert, dass sie parallel zu einer Tiefenrichtung einer Zahnkavität der äußeren Hülle 28 verläuft. Dabei ist die positive Richtung der Z Richtung parallel zu einer Richtung definiert, die sich ausgehend von einem Grund einer Zahnkavität in Richtung einer Öffnung der Zahnkavität erstreckt.

Die übrigen Achsen des Koordinatensystems sind für die nachfolgenden Erläuterungen nicht relevant und werden daher nicht näher definiert.

In einem zweiten Schritt S2 wird eine Zahnfleischkammlinie 30 der äußeren Hülle 28 identifiziert. Im vorliegenden Beispiel handelt es sich dabei um eine labiale Zahnfleischkammlinie 30a.

Dies erfolgt vorzugsweise computergestützt unter Nutzung der Vorrichtung 10 zur Datenverarbeitung. Dabei kann das Identifizieren der Zahnfleischkammlinie 30 voll automatisiert erfolgen. Auch ist es möglich, dass die Zahnfleischkammlinie 30 manuell identifiziert wird.

Gemäß einer Alternative ist es alternativ möglich, dass im zweiten Schritt S2 lediglich Zahnfleischkammliniendaten erhalten werden, die die Zahnfleischkammlinie 30 der äußeren Hülle 28 beschreiben.

Darauf aufbauend wird in einem dritten Schritt S3 eine erste Bezugslinie 32 dadurch festgelegt, dass die Zahnfleischkammlinie 30 um ein erstes Verschiebungsinkrement M1 in Richtung eines Inneren der äußeren Hülle 28 parallelverschoben wird.

Die Verschiebung erfolgt dabei in eine Richtung parallel zur negativen Richtung der Z-Achse.

Das erste Verschiebungsinkrement M1 beträgt beispielsweise 2 mm.

Die erste Bezugslinie ist in Figur 2 und Figur 3 eingezeichnet, obwohl diese selbstverständlich nicht zu den Außenhülledaten gehört, sondern auf Basis der Außenhülledaten generiert wird.

In einem vierten Schritt S4 wird zudem eine zweite Bezugslinie 34 festgelegt. Das erfolgt wieder durch eine Parallelverschiebung der Zahnfleischkammlinie 30, dieses Mal jedoch um ein zweites Verschiebungsinkrement M2. Die Verschiebung erfolgt wieder in Richtung eines Inneren der äußeren Hülle 28 und parallel zur negativen Richtung der Z-Achse.

Das zweite Verschiebungsinkrement M2 unterscheidet sich vom ersten Verschiebungsinkrement und beträgt beispielsweise 5 mm.

Im dargestellten Beispiel unterscheiden sich also das erste Verschiebungsinkrement M1 und das zweite Verschiebungsinkrement M2 um ein Delta MD von 3 mm.

Auch die zweite Bezugslinie 34 ist in Figur 2 und Figur 3 eingezeichnet, obwohl diese selbstverständlich nicht zu den Außenhülledaten gehört, sondern auf Basis der Außenhülledaten generiert wird.

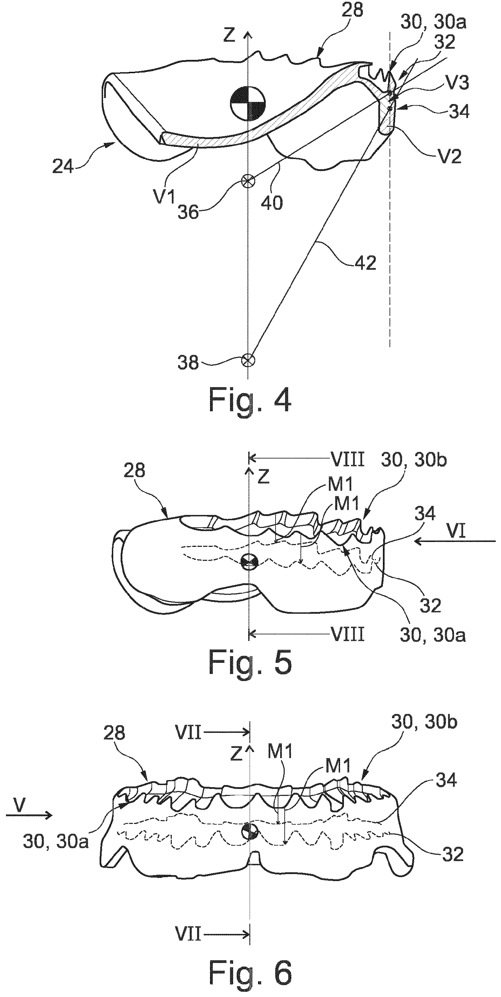

In einem darauffolgenden fünften Schritt S5 wird ein erster Bezugspunkt 36 festgelegt (siehe Figur 4). Dabei liegt der erste Bezugspunkt 36 auf der Z-Achse. Im vorliegenden Beispiel liegt der erste Bezugspunkt 36 bei ca. -2 cm.

In einem sechsten Schritt S6 wird darüber hinaus ein zweiter Bezugspunkt 38 festgelegt. Auch der zweite Bezugspunkt 38 liegt auf der Z-Achse. Im vorliegenden Beispiel liegt der zweite Bezugspunkt bei ca. -7 cm.

Es befinden sich im dargestellten Beispiel also sowohl der erste Bezugspunkt 36 als auch der zweite Bezugspunkt 38 in einer Verwendungsstellung der Dentalprothesenbasis 24 unterhalb der Dentalprothesenbasis 24. Das ist gleichbedeutend damit, dass beide Bezugspunkte 36, 38 im negativen Bereich der Z-Achse liegen.

Danach wird in einem siebten Schritt S7 eine erste Trennfläche 40 festgelegt. Die erste Trennfläche 40 ist als eine Fläche definiert, die alle geraden Linien umfasst, die sich durch den ersten Bezugspunkt 36 und durch die erste Bezugslinie 32 erstrecken.

In gleicher Weise wird in einem achten Schritt S8 eine zweite Trennfläche 42 festgelegt. Die zweite Trennfläche 42 ist als eine Fläche definiert, die alle geraden Linien umfasst, die sich durch den zweiten Bezugspunkt 38 und durch die zweiten Bezugslinie 34 erstrecken.

Danach können in einem neunten Schritt S9 Subvolumina der Dentalprothesenbasis 24 abgeleitet werden.

In diesem Zusammenhang ist ein erstes Subvolumen V1 durch die äußere Hülle 28 und die erste Trennfläche 40 begrenzt. Das erste Subvolumen V1 betrifft also diejenigen Abschnitte eines von der äußeren Hülle 28 umschlossenen Volumens, die in Figur 4 oberhalb der ersten Trennfläche 40 liegen.

Ein zweites Subvolumen V2 ist durch die äußere Hülle 28 und die zweite Trennfläche 42 begrenzt. Folglich betrifft das zweite Subvolumen V2 diejenigen Abschnitte eines von der äußeren Hülle 28 umschlossenen Volumens, die in Figur 4 unterhalb der zweiten Trennfläche 42 liegen.

Ein drittes Subvolumen V3 ist durch die erste Trennfläche 40, die zweite Trennfläche 42 und die äußere Hülle 28 begrenzt. Das dritte Subvolumen V3 betrifft also diejenigen Abschnitte des von der äußeren Hülle 28 umschlossenen Volumens, die zwischen der ersten Trennfläche 40 und der zweiten Trennfläche 42 liegen.

Nun wird in einem zehnten Schritt S10 jedem der Subvolumina eine Farbinformation zugeordnet.

Im dargestellten Beispiel wird dem ersten Subvolumen V1 eine verhältnismäßig dunkle Farbe zugeordnet. Dabei handelt es sich beim ersten Subvolumen V1 um dasjenige Subvolumen, das die Zahnfleischkammlinie 30 umfasst.

Dem dritten Subvolumen V3 wird eine verhältnismäßig helle Farbe zugeordnet. Dabei grenzt das dritte Subvolumen V3 an das erste Subvolumen V1 an, umfasst jedoch nicht die Zahnfleischkammlinie 30.

Dem zweiten Subvolumen V2 wird dieselbe Farbe zugeordnet, die auch dem ersten Subvolumen V1 zugeordnet wurde, also eine verhältnismäßig dunkle Farbe.

Zudem wird jedem der Subvolumina V1, V2, V3 auch eine Materialinformation, eine Farbhelligkeitsinformation und eine Transluzenzinformation zugeordnet.

Im Sinne einer einfacheren Erläuterung sind im dargestellten Beispiel jedoch die Materialinformation, die Farbhelligkeitsinformation und die Transluzenzinformation für jedes der Subvolumina V1, V2, V3 gleich. Dabei weisen alle Subvolumina V1, V2, V3 eine gewisse Transluzenz auf.

Das bedeutet, dass ein Abschnitt eines der Subvolumina V1, V2, V3 der bei einer Betrachtung der Dentalprothesenbasis 24 hinter einem Abschnitt eines anderen der Subvolumina V1, V2, V3 liegt, durch diesen durchscheinen kann.

Das gilt insbesondere, wenn die Dentalprothesenbasis 24 in der Darstellung gemäß Figur 4 von rechts betrachtet wird.

Aufgrund der Tatsache, dass sowohl die erste Trennfläche 40 als auch die zweite Trennfläche 42 schräg verlaufen, befindet sich bei einer derartigen Betrachtung ein Abschnitt des dritten Subvolumens V3 hinter einem Abschnitt des zweiten Subvolumens V2. In gleicher Weise ist ein Abschnitt des ersten Subvolumens V1 hinter einem Abschnitt des dritten Subvolumens V3 angeordnet.

Der schräge Verlauf der ersten Trennfläche 40 und der zweiten Trennfläche 42 führt zudem dazu, dass Dicken derjenigen Abschnitte des ersten Subvolumens V1, des zweiten Subvolumens V2 und des dritten Subvolumens V3, die an die erste Trennfläche 40 und an die zweite Trennfläche 42 angrenzen, sich kontinuierlich verändern.

Aus diesem Grund nimmt ein Betrachter, der die Dentalprothesenbasis 24 in der Darstellung gemäß Figur 4 von rechts betrachtet, einen kontinuierlichen Farbverlauf wahr.

Damit ist der Innenaufbau der Dentalprothesenbasis 24 vollständig bestimmt.

In einem nachfolgenden Schritt des Verfahrens zur Herstellung der Dentalprothesenbasis 24 kann die Dentalprothesenbasis 24 mit diesem Innenaufbau mittels Werkstoffen gefertigt werden, die sich in wenigstens einem ausgewählt aus Material, Farbe, Farbhelligkeit und Transluzenz unterscheiden. Wie bereits erläutert, unterscheiden sich vorliegend die Werkstoffe hinsichtlich ihrer Farbe.

Hierfür kann die Herstellungsvorrichtung 22 genutzt werden.

Im Ergebnis ergibt sich eine Dentalprothesenbasis 24 mit einer äußeren Hülle 28 und einem Innenaufbau, wobei der Innenaufbau mittels des Verfahrens zum Bestimmen eines Innenaufbaus einer Dentalprothesenbasis 24 bestimmt ist.

Vorliegend wurde das Verfahren zum Bestimmen eines Innenaufbaus der Dentalprothesenbasis 24 unter Verwendung der labialen Zahnfleischkammlinie 30a erläutert. Gemäß einer Variante kann jedoch das Verfahren in gleicher Weise unter Verwendung der lingualen Zahnfleischkammlinie ausgeführt werden. Dabei wird anstelle der labialen Zahnfleischkammlinie die linguale Zahnfleischkammlinie zweimal parallelverschoben. Die vorstehenden Erläuterungen gelten entsprechend.

Auch ist eine Variante denkbar, bei der lediglich ein Bezugspunkt, also entweder der erste Bezugspunkt oder der zweite Bezugspunkt verwendet werden. In dieser Variante wird also eine aus erster und zweiter Trennfläche unter Verwendung der ersten Bezugslinie und des ersten Bezugspunkts definiert und die andere Trennfläche unter Verwendung der zweiten Bezugslinie und des ersten Bezugspunkts. Alternativ wird eine aus erster und zweiter Trennfläche unter Verwendung der ersten Bezugslinie und des zweiten Bezugspunkts definiert und die andere Trennfläche unter Verwendung der zweiten Bezugslinie und des zweiten Bezugspunkts.

Das Verfahren zur Herstellung der Dentalprothesenbasis 24 kann auch gemäß einer zweiten Ausführungsform ausgebildet sein. Diese wird nachfolgend anhand der Figuren 5 bis 8 im Detail erläutert. Die Dentalprothesenbasis 24, die aus der Anwendung des Verfahrens resultiert, ist somit ebenfalls gemäß einer zweiten Ausführungsform ausgeprägt.

Das Verfahren umfasst wieder das Bestimmen eines Innenaufbaus der Dentalprothesenbasis 24. Hierfür wird ein Verfahren zum Bestimmen eines Innenaufbaus einer Dentalprothesenbasis 24 gemäß einer zweiten Ausführungsform verwendet.

Ein erster Schritt S1 des Verfahrens zum Bestimmen eines Innenausbaus der Dentalprothesenbasis 24 umfasst wieder das Erhalten von Außenhülledaten, die eine äußere Hülle 28 der Dentalprothesenbasis 24 beschreiben. Ein Beispiel für eine äußere Hülle 28 der Dentalprothesenbasis 24 ist dabei in den Figuren 5 und 6 grafisch repräsentiert.

Die Außenhülledaten können dabei wieder ein Koordinatensystem umfassen, das in gleicher Weise wie bei der ersten Ausführungsform definiert ist.

In einem zweiten Schritt S2 werden eine labiale Zahnfleischkammlinie 30a und eine linguale Zahnfleischkammlinie 30b der äußeren Hülle 28 identifiziert. Im Unterschied zum Verfahren gemäß der ersten Ausführungsform werden also insgesamt zwei Zahnfleischkammlinien 30 identifiziert.

Dies erfolgt vorzugsweise computergestützt unter Nutzung der Vorrichtung 10 zur Datenverarbeitung. Dabei kann das Identifizieren der Zahnfleischkammlinien 30a, 30b voll automatisiert erfolgen. Auch ist es möglich, dass die Zahnfleischkammlinien 30a, 30b manuell identifiziert werden.

Gemäß einer Alternative ist es ebenso möglich, dass im zweiten Schritt S2 lediglich Zahnfleischkammliniendaten erhalten werden, die die Zahnfleischkammlinien 30a, 30b der äußeren Hülle 28 beschreiben.

Darauf aufbauend wird in einem dritten Schritt S3 eine erste Bezugslinie 32 dadurch festgelegt, dass die labiale Zahnfleischkammlinie 30a um ein erstes Verschiebungsinkrement M1 in Richtung eines Inneren der äußeren Hülle 28 parallel verschoben wird.

Die Verschiebung erfolgt dabei in eine Richtung parallel zur negativen Richtung der Z-Achse.

Das erste Verschiebungsinkrement M1 beträgt beispielsweise 5 mm.

Die erste Bezugslinie 32 ist in Figur 5 und Figur 6 eingezeichnet, obwohl diese selbstverständlich nicht zu den Außenhülledaten gehört, sondern auf Basis der Außenhülledaten generiert wird.

In einem vierten Schritt S4 wird zudem eine zweite Bezugslinie 34 festgelegt. Das erfolgt durch eine Parallelverschiebung der lingualen Zahnfleischkammlinie 30b, wobei die Verschiebung in eine Richtung parallel zur negativen Richtung der Z-Achse erfolgt und ebenfalls das erste Verschiebungsinkrement M1 genutzt wird. Es wird also auch die linguale Zahnfleischkammlinie 30b um 5mm parallelverschoben.

Auch die zweite Bezugslinie 34 ist in Figur 5 und Figur 6 eingezeichnet, obwohl diese selbstverständlich nicht zu den Außenhülledaten gehört, sondern auf Basis der Außenhülledaten generiert wird.

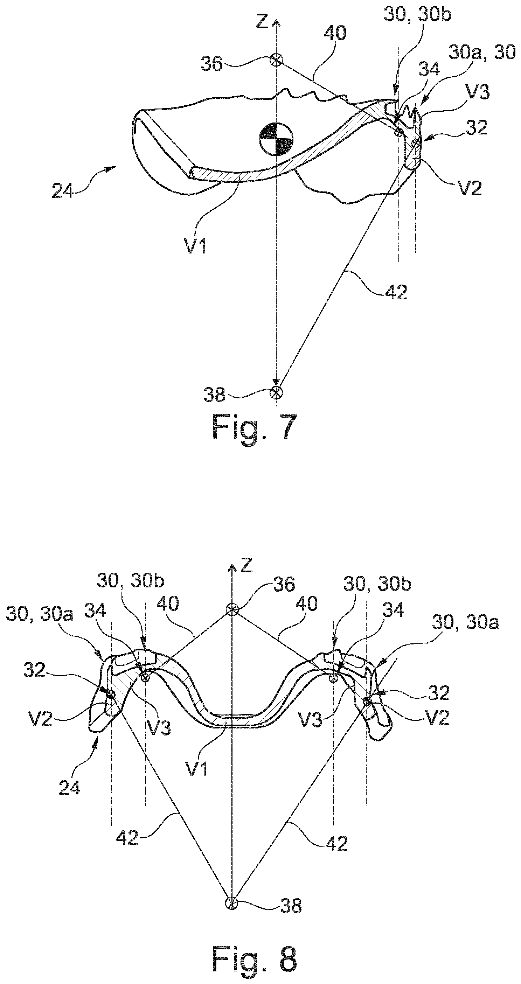

In einem darauffolgenden fünften Schritt S5 wird ein erster Bezugspunkt 36 festgelegt. Dabei liegt der erste Bezugspunkt 36 auf der Z-Achse. Im vorliegenden Beispiel liegt der erste Bezugspunkt bei ca. +2 cm. Im Unterschied zur vorhergehenden Ausführungsform also auf der positiven Z-Achse (siehe Figuren 7 und 8).

In einem sechsten Schritt S6 wird darüber hinaus ein zweiter Bezugspunkt 38 festgelegt. Auch der zweite Bezugspunkt 38 liegt auf der Z-Achse. Im vorliegenden Beispiel liegt der zweite Bezugspunkt bei ca. -7 cm.

Es befinden sich im dargestellten Beispiel also in einer Verwendungsstellung der Dentalprothesenbasis 24 der erste Bezugspunkt 36 oberhalb der Dentalprothesenbasis und der zweite Bezugspunkt 38 unterhalb der Dentalprothesenbasis 24.

Danach wird in einem siebten Schritt S7 eine erste Trennfläche 40 festgelegt. Die erste Trennfläche 40 ist als eine Fläche definiert, die alle geraden Linien umfasst, die sich durch den ersten Bezugspunkt 36 und durch die erste Bezugslinie 32 erstrecken.

In gleicher Weise wird in einem achten Schritt S8 eine zweite Trennfläche 42 festgelegt. Die zweite Trennfläche 42 ist als eine Fläche definiert, die alle geraden Linien umfasst, die sich durch den zweiten Bezugspunkt 38 und durch die zweite Bezugslinie 34 erstrecken.

Danach können in einem neunten Schritt S9 Subvolumina der Dentalprothesenbasis abgeleitet werden.

In diesem Zusammenhang ist ein erstes Subvolumen V1 durch die äußere Hülle 28 und die erste Trennfläche 40 begrenzt. Das erste Subvolumen V1 betrifft also diejenigen Abschnitte eines von der äußeren Hülle 28 umschlossenen Volumens, die in den Figuren 7 und 8 unterhalb der ersten Trennfläche 40 liegen. Dabei ist zu beachten, dass die erste Trennfläche 40 das von der äußeren Hülle 28 definierte Volumen also nur einmal schneidet.

Allgemeiner gesprochen wird in Fällen, in denen die erste Trennfläche 40 und das von der äußeren Hülle 28 definierte Volumen mehrere, voneinander separate Schnittflächen aufweisen, lediglich diejenige Schnittfläche berücksichtigt, die dem ersten Bezugspunkt 36 am nächsten liegt. Für die zweite Trennfläche 42 und den zweiten Bezugspunkt 38 gilt gegebenenfalls dasselbe.

Ein zweites Subvolumen V2 ist durch die äußere Hülle 28 und die zweite Trennfläche 42 begrenzt. Folglich betrifft das zweite Subvolumen V2 diejenigen Abschnitte eines von der äußeren Hülle 28 umschlossenen Volumens, die in den Figuren 7 und 8 unterhalb der zweiten Trennfläche 42 liegen.

Ein drittes Subvolumen V3 ist durch die erste Trennfläche 40, die zweite Trennfläche 42 und die äußere Hülle 28 begrenzt. Das dritte Subvolumen V3 betrifft also diejenigen Abschnitte des von der äußeren Hülle 28 umschlossenen Volumens, die zwischen der ersten Trennfläche 40 und der zweiten Trennfläche 42 liegen.

Nun wird in einem zehnten Schritt S10 eine Farbinformation jedem der Subvolumina zugeordnet.

Im dargestellten Beispiel wird dem ersten Subvolumen V1 eine verhältnismäßig dunkle Farbe zugeordnet. Dabei handelt es sich in der vorliegenden Ausführungsform beim ersten Subvolumen V1 um ein Subvolumen, das von den Zahnfleischkammlinien 30a, 30b separat ist, also keine der Zahnfleischkammlinien 30a, 30b umfasst.

Dem dritten Subvolumen V3 wird eine verhältnismäßig helle Farbe zugeordnet. Dabei grenzt das dritte Subvolumen V3 an das erste Subvolumen V1 an. In der vorliegenden Ausführungsform umfasst das dritte Subvolumen V3 sowohl die labiale als auch die linguale Zahnfleischkammlinie 30a, 30b.

Dem zweiten Subvolumen wird dieselbe Farbe zugeordnet, die auch dem ersten Subvolumen V1 zugeordnet wurde, also eine verhältnismäßig dunkle Farbe.

Zudem wird jedem der Subvolumina V1, V2, V3 auch eine Materialinformation, eine Farbhelligkeitsinformation und eine Transluzenzinformation zugeordnet.

Im Sinne einer einfacheren Erläuterung sind im dargestellten Beispiel jedoch die Materialinformation, die Farbhelligkeitsinformation und die Transluzenzinformation für jedes der Subvolumina V1, V2, V3 gleich. Dabei weisen alle Subvolumina V1, V2, V3 eine gewisse Transluzenz auf.

Das bedeutet, dass ein Abschnitt eines der Subvolumina V1, V2, V3 der bei einer Betrachtung der Dentalprothesenbasis 24 hinter einem Abschnitt eines anderen der Subvolumina V1, V2, V3 liegt, durch diesen durchscheinen kann.

Das gilt insbesondere, wenn die Dentalprothesenbasis 24 in der Darstellung gemäß Figur 7 von rechts und der Darstellung gemäß Figur 8 von links oder von rechts betrachtet wird.

Aufgrund der Tatsache, dass sowohl die erste Trennfläche 40 als auch die zweite Trennfläche 42 schräg verlaufen, befindet sich bei einer derartigen Betrachtung ein Abschnitt des dritten Subvolumens V3 hinter einem Abschnitt des zweiten Subvolumens V2. In gleicher Weise ist ein Abschnitt des ersten Subvolumens V1 hinter einem Abschnitt des dritten Subvolumens V3 angeordnet.

Der schräge Verlauf der ersten Trennfläche 40 und der zweiten Trennfläche 42 führt zudem dazu, dass Dicken derjenigen Abschnitte des ersten Subvolumens V1, des zweiten Subvolumens V2 und des dritten Subvolumens V3, die an die erste Trennfläche 40 und an die zweite Trennfläche 42 angrenzen, sich kontinuierlich verändern.

Aus diesem Grund nimmt ein Betrachter, der die Dentalprothesenbasis 24 in der Darstellung gemäß Figur 7 von rechts und die Darstellung gemäß Figur 8 von links oder von rechts betrachtet, einen kontinuierlichen Farbverlauf wahr.

Damit ist der Innenaufbau der Dentalprothesenbasis 24 vollständig bestimmt.

In einem nachfolgenden Schritt des Verfahrens zur Herstellung der Dentalprothesenbasis 24 kann die Dentalprothesenbasis 24 mit diesem Innenaufbau mittels Werkstoffen gefertigt werden, die sich in wenigstens einem ausgewählt aus Material, Farbe, Farbhelligkeit und Transluzenz unterscheiden. Wie bereits erläutert, unterscheiden sich vorliegend die Werkstoffe hinsichtlich ihrer Farbe.

Hierfür kann die Herstellungsvorrichtung 22 genutzt werden.

Im Ergebnis ergibt sich eine Dentalprothesenbasis 24 mit einer äußeren Hülle 28 und einem Innenaufbau, wobei der Innenaufbau mittels des Verfahrens zum Bestimmen eines Innenaufbaus einer Dentalprothesenbasis 24 bestimmt ist.

Obwohl beim Verfahren gemäß der zweiten Ausführungsform zwei Bezugspunkte, nämlich der erste Bezugspunkt 36 und der zweite Bezugspunkt 38, verwendet wurden, ist eine Variante denkbar, bei der lediglich ein Bezugspunkt, also entweder der erste Bezugspunkt 36 oder der zweite Bezugspunkt 38 verwendet werden. In dieser Variante wird also eine aus erster Trennfläche 40 und zweiter Trennfläche 42 unter Verwendung der ersten Bezugslinie 32 und des ersten Bezugspunkts 36 definiert und die andere aus erster Trennfläche 40 und zweiter Trennfläche 42 unter Verwendung der zweiten Bezugslinie 34 und des ersten Bezugspunkts 36. Alternativ wird eine aus erster Trennfläche 40 und zweiter Trennfläche 42 unter Verwendung der ersten Bezugslinie 32 und des zweiten Bezugspunkts 38 definiert und die andere aus erster Trennfläche 40 und zweiter Trennfläche 42 unter Verwendung der zweiten Bezugslinie 34 und des zweiten Bezugspunkts 38.

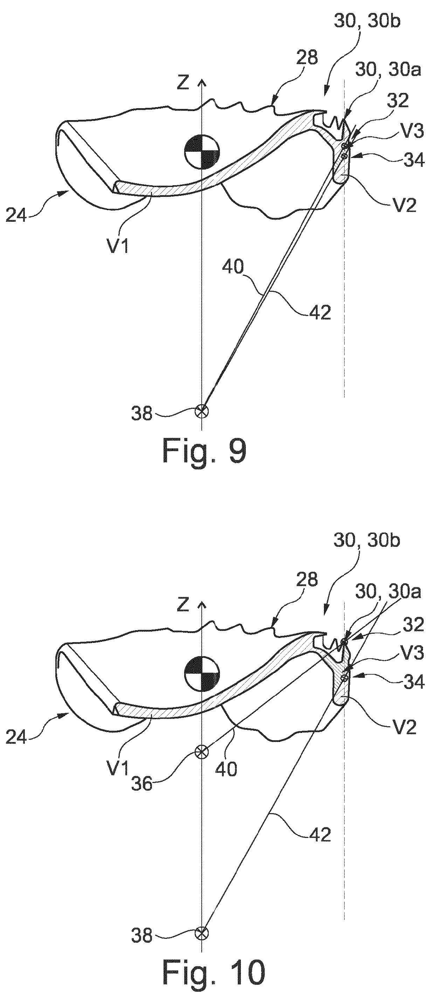

Das Verfahren zur Herstellung der Dentalprothesenbasis 24 kann auch gemäß einer dritten Ausführungsform ausgebildet sein. Diese wird nachfolgend anhand der Figur 9 im Detail erläutert. Die Dentalprothesenbasis 24, die aus der Anwendung des Verfahrens resultiert, ist somit ebenfalls gemäß einer dritten Ausführungsform ausgeprägt.

Das Verfahren umfasst wieder das Bestimmen eines Innenaufbaus der Dentalprothesenbasis 24. Hierfür wird ein Verfahren zum Bestimmen eines Innenaufbaus einer Dentalprothesenbasis 24 gemäß einer dritten Ausführungsform verwendet.

Dabei stellt vorliegend das Verfahren zum Bestimmen eines Innenaufbaus einer Dentalprothesenbasis 24 gemäß der dritten Ausführungsform eine Variante des Verfahrens zum Bestimmen eines Innenaufbaus einer Dentalprothesenbasis 24 gemäß der ersten Ausführungsform dar. Im Folgenden wird daher lediglich auf die Unterschiede zwischen erster und dritter Ausführungsform eingegangen.

Das Verfahren zum Bestimmen eines Innenaufbaus einer Dentalprothesenbasis 24 gemäß der dritten Ausführungsform unterscheidet sich dadurch von der ersten Ausführungsform, dass anstelle von zwei Bezugspunkten lediglich ein einziger Bezugspunkt verwendet wird.

Ausgehend von der in Figur 4 dargestellten ersten Ausführungsform wird dabei in der in Figur 9 gezeigten dritten Ausführungsform lediglich der zweite Bezugspunkt 38 verwendet.

Es wird somit die erste Trennfläche 40 unter Verwendung des zweiten Bezugspunkts 38 und der ersten Bezugslinie 32 definiert. Die zweite Trennfläche 42 wird unter Verwendung des zweiten Bezugspunkts 38 und der zweiten Bezugslinie 34 definiert.

Im Übrigen wird auf die vorstehenden Erläuterungen zum Verfahren zum Bestimmen eines Innenaufbaus einer Dentalprothesenbasis 24 gemäß der ersten Ausführungsform verwiesen werden.

Vorliegend wurde das Verfahren zum Bestimmen eines Innenaufbaus der Dentalprothesenbasis 24 gemäß der dritten Ausführungsform unter Verwendung der labialen Zahnfleischkammlinie 30a erläutert und illustriert. Gemäß einer Variante kann jedoch das Verfahren in gleicher Weise unter Verwendung der lingualen Zahnfleischkammlinie 30b ausgeführt werden. Dabei wird anstelle der labialen Zahnfleischkammlinie 30a die linguale Zahnfleischkammlinie 30b zweimal parallelverschoben. Die vorstehenden Erläuterungen gelten entsprechend.

Das Verfahren zur Herstellung der Dentalprothesenbasis 24 kann auch gemäß einer vierten Ausführungsform ausgebildet sein. Diese wird nachfolgend anhand der Figur 10 im Detail erläutert. Die Dentalprothesenbasis 24, die aus der Anwendung des Verfahrens resultiert, ist somit ebenfalls gemäß einer vierten Ausführungsform ausgeprägt.

Das Verfahren umfasst wieder das Bestimmen eines Innenaufbaus der Dentalprothesenbasis 24. Hierfür wird ein Verfahren zum Bestimmen eines Innenaufbaus einer Dentalprothesenbasis 24 gemäß einer vierten Ausführungsform verwendet.

Dabei stellt vorliegend das Verfahren zum Bestimmen eines Innenaufbaus einer Dentalprothesenbasis 24 gemäß der vierten Ausführungsform eine Variante des Verfahrens zum Bestimmen eines Innenaufbaus einer Dentalprothesenbasis 24 gemäß der ersten Ausführungsform dar. Im Folgenden wird daher lediglich auf die Unterschiede zwischen erster und vierter Ausführungsform eingegangen.

Der Unterschied besteht darin, dass die erste Bezugslinie 32 dadurch bestimmt wird, dass die labiale Zahnfleischkammlinie 30a als erste Bezugslinie 32 festgelegt wird.

Die zweite Bezugslinie 34 wird wie in der ersten Ausführungsform durch eine Parallelverschiebung der labialen Zahnfleischkammlinie 30a festgelegt.

Im Übrigen wird auf die vorstehenden Erläuterungen zum Verfahren zum Bestimmen eines Innenaufbaus einer Dentalprothesenbasis 24 gemäß der ersten Ausführungsform verwiesen werden.

Vorliegend wurde das Verfahren zum Bestimmen eines Innenaufbaus der Dentalprothesenbasis 24 gemäß der vierten Ausführungsform unter Verwendung der labialen Zahnfleischkammlinie 30a erläutert und illustriert. Gemäß einer Variante kann jedoch das Verfahren in gleicher Weise unter Verwendung der lingualen Zahnfleischkammlinie 30b ausgeführt werden. Dabei wird anstelle der labialen Zahnfleischkammlinie 30a die linguale Zahnfleischkammlinie 30b einmal parallelverschoben und einmal als Bezugslinie festgelegt. Die vorstehenden Erläuterungen gelten entsprechend.

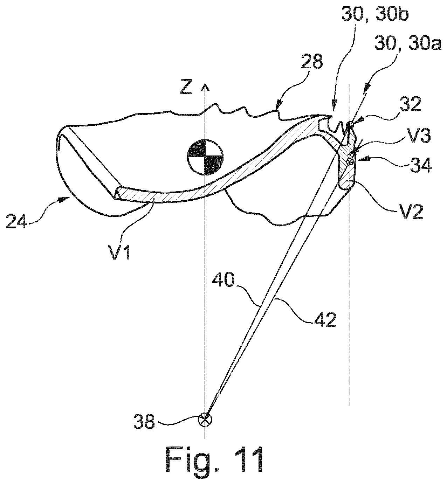

Das Verfahren zur Herstellung der Dentalprothesenbasis 24 kann auch gemäß einer fünften Ausführungsform ausgebildet sein. Diese wird nachfolgend anhand der Figur 11 im Detail erläutert. Die Dentalprothesenbasis 24, die aus der Anwendung des Verfahrens resultiert, ist somit ebenfalls gemäß einer fünften Ausführungsform ausgeprägt.

Das Verfahren umfasst wieder das Bestimmen eines Innenaufbaus der Dentalprothesenbasis 24. Hierfür wird ein Verfahren zum Bestimmen eines Innenaufbaus einer Dentalprothesenbasis 24 gemäß einer fünften Ausführungsform verwendet.

Dabei stellt vorliegend das Verfahren zum Bestimmen eines Innenaufbaus einer Dentalprothesenbasis 24 gemäß der fünften Ausführungsform eine Kombination des Verfahrens zum Bestimmen eines Innenaufbaus einer Dentalprothesenbasis 24 gemäß der dritten Ausführungsform und gemäß der Ausführungsform dar. Ebenso kann das Verfahren zum Bestimmen eines Innenaufbaus einer Dentalprothesenbasis 24 gemäß der fünften Ausführungsform als eine Variante des Verfahrens zum Bestimmen eines Innenaufbaus einer Dentalprothesenbasis 24 gemäß der ersten Ausführungsform angesehen werden.

Im Unterschied zur ersten Ausführungsform wird also in der fünften Ausführungsform die erste Bezugslinie 32 dadurch bestimmt, dass die labiale Zahnfleischkammlinie 30a als erste Bezugslinie 32 festgelegt wird.

Die zweite Bezugslinie 34 wird wie in der ersten Ausführungsform durch eine Parallelverschiebung der labialen Zahnfleischkammlinie 30a festgelegt.

Ferner wird in der fünften Ausführungsform anstelle von zwei Bezugspunkten lediglich ein einziger Bezugspunkt verwendet.

Ausgehend von der in Figur 4 dargestellten ersten Ausführungsform wird dabei in der in Figur 11 gezeigten fünften Ausführungsform lediglich der zweite Bezugspunkt 38 verwendet.

Es wird somit die erste Trennfläche 40 unter Verwendung des zweiten Bezugspunkts 38 und der ersten Bezugslinie 32 definiert. Die zweite Trennfläche 42 wird unter Verwendung des zweiten Bezugspunkts 38 und der zweiten Bezugslinie 34 definiert.

Im Übrigen wird auf die vorstehenden Erläuterungen zum Verfahren zum Bestimmen eines Innenaufbaus einer Dentalprothesenbasis 24 gemäß der ersten Ausführungsform verwiesen werden.

Vorliegend wurde das Verfahren zum Bestimmen eines Innenaufbaus der Dentalprothesenbasis 24 gemäß der fünften Ausführungsform unter Verwendung der labialen Zahnfleischkammlinie 30a erläutert und illustriert. Gemäß einer Variante kann jedoch das Verfahren in gleicher Weise unter Verwendung der lingualen Zahnfleischkammlinie 30b ausgeführt werden. Dabei wird anstelle der labialen Zahnfleischkammlinie 30a die linguale Zahnfleischkammlinie 30b einmal parallelverschoben und einmal als Bezugslinie festgelegt. Die vorstehenden Erläuterungen gelten entsprechend.

Im Übrigen versteht es sich, dass die vorstehenden Ausführungsformen auch kombiniert werden können.

### Bezugszeichenliste

- 10: Vorrichtung zur Datenverarbeitung
- 12: Speichereinheit
- 14: Recheneinheit
- 16: computerlesbares Medium
- 18: Computerprogramm
- 20: Mittel zum Ausführen eines Verfahrens zum Bestimmen eines Innenaufbaus einer Dentalprothesenbasis
- 22: Herstellungsvorrichtung
- 24: Dentalprothesenbasis
- 26: Computerprogramm
- 28: äußere Hülle
- 30: Zahnfleischkammlinie
- 30a: labiale Zahnfleischkammlinie
- 30b: linguale Zahnfleischkammlinie
- 32: erste Bezugslinie
- 34: zweite Bezugslinie
- 36: erster Bezugspunkt
- 38: zweiter Bezugspunkt
- 40: erste Trennfläche
- 42: zweite Trennfläche

- M1: erstes Verschiebungsinkrement
- M2: zweites Verschiebungsinkrement
- MD: Delta des ersten Verschiebungsinkrements und des zweiten Verschiebungsinkrements
- S1: erster Schritt
- S2: zweiter Schritt
- S3: dritter Schritt
- S4: vierter Schritt
- S5: fünfter Schritt
- S6: sechster Schritt
- S7: siebter Schritt
- S8: achter Schritt
- S9: neunter Schritt
- S10: zehnter Schritt
- V1: erstes Subvolumen
- V2: zweites Subvolumen
- V3: drittes Subvolumen

## Patentansprüche

1. Computerimplementiertes Verfahren zum Bestimmen eines Innenaufbaus einer Dentalprothesenbasis (24), wobei die Dentalprothesenbasis (24) im Wesentlichen Zahnfleisch nachbildet, wobei das Verfahren umfasst:
- Erhalten von Außenhülledaten, die eine äußere Hülle (28) der Dentalprothesenbasis (24) beschreiben (S1),
- Identifizieren einer Zahnfleischkammlinie (30, 30a, 30b) der äußeren Hülle (28) der Dentalprothesenbasis (24) oder Erhalten von Zahnfleischkammliniendaten, die die Zahnfleischkammlinie (30, 30a, 30b) der äußeren Hülle (28) beschreiben (S2), wobei die Zahnfleischkammlinie (30, 30a, 30b) eine Linie ist, die mit Bezug auf eine vorgegebene Dimension oder Richtung die lokal höchsten Punkte der Dentalprothesenbasis (24) verbindet,
- Festlegen einer ersten Bezugslinie (32) durch Parallelverschieben der Zahnfleischkammlinie (30, 30a, 30b) in Richtung eines Inneren der äußeren Hülle (28) um ein erstes Verschiebungsinkrement (M1) oder Festlegen der Zahnfleischkammlinie (30, 30a, 30b) als eine erste Bezugslinie (32) (S3),
- Festlegen eines ersten Bezugspunkts (36), welcher in einer Verwendungsstellung der Dentalprothesenbasis (24) oberhalb oder unterhalb der Dentalprothesenbasis (24) liegt (S5),
- Festlegen einer ersten Trennfläche (40) als eine Fläche, die alle geraden Linien umfasst, die sich durch den ersten Bezugspunkt (36) und durch die erste Bezugslinie (32) erstrecken (S7),
- Ableiten wenigstens eines Subvolumens (V1, V3) der Dentalprothesenbasis (24) als ein von der ersten Trennfläche (40) und der äußeren Hülle (28) begrenztes Volumen (S9), und
- Zuordnen von einem Material zu dem wenigstens einen Subvolumen (V1, V3), das bezüglich einem Material, das einem anderen Subvolumen zugeordnet ist, unterschiedliche optische Eigenschaften aufweist.

2. Computerimplementiertes Verfahren nach Anspruch 1, ferner umfassend
- Festlegen einer zweiten Bezugslinie (34) durch Parallelverschieben der Zahnfleischkammlinie (30, 30a, 30b) in Richtung eines Inneren der äußeren Hülle (28) um ein zweites Verschiebungsinkrement (M2), wobei das erste Verschiebungsinkrement (M1) und das zweite Verschiebungsinkrement (M2) unterschiedlich sind (S4),
- Festlegen einer zweiten Trennfläche (42) als eine Fläche, die alle geraden Linien umfasst, die sich durch den ersten Bezugspunkt (32) und durch die zweite Bezugslinie (34) erstrecken (S8), und
- Ableiten wenigstens eines Subvolumens (V2, V3) der Dentalprothesenbasis (24) als ein von der zweiten Trennfläche (42) und der äußeren Hülle (28) begrenztes Volumen (S9).

3. Computerimplementiertes Verfahren nach Anspruch 1, ferner umfassend
- Festlegen einer zweiten Bezugslinie (34) durch Parallelverschieben der Zahnfleischkammlinie (30, 30a, 30b) in Richtung eines Inneren der äußeren Hülle (28) um ein zweites Verschiebungsinkrement (M2), wobei das erste Verschiebungsinkrement (M1) und das zweite Verschiebungsinkrement (M2) unterschiedlich sind (S4),
- Festlegen eines zweiten Bezugspunkts (38), welcher in einer Verwendungsstellung der Dentalprothesenbasis (24) oberhalb oder unterhalb der Dentalprothesenbasis liegt, wobei der erste Bezugspunkt (36) und der zweite Bezugspunkt (38) unterschiedlich sind (S6),
- Festlegen einer zweiten Trennfläche (42) als eine Fläche, die alle geraden Linien umfasst, die sich durch den zweiten Bezugspunkt (38) und durch die zweite Bezugslinie (34) erstrecken (S8), und
- Ableiten wenigstens eines Subvolumens (V2, V3) der Dentalprothesenbasis (24) als ein von der zweiten Trennfläche (42) und der äußeren Hülle (28) begrenztes Volumen (S9).

4. Computerimplementiertes Verfahren nach einem der vorhergehenden Ansprüche, wobei die Zahnfleischkammlinie (30, 30a, 30b) eine labiale Zahnfleischkammlinie (30a) ist oder wobei die Zahnfleischkammlinie (30, 30a, 30b) eine linguale Zahnfleischkammlinie (30b) ist.

5. Computerimplementiertes Verfahren nach Anspruch 1,
wobei das Identifizieren der Zahnfleischkammlinie (30, 30a, 30b) das Identifizieren einer labialen Zahnfleischkammlinie (30a) der äußeren Hülle (28) der Dentalprothesenbasis (24) oder das Erhalten von labialen Zahnfleischkammliniendaten, die die labiale Zahnfleischkammlinie (30a) der äußeren Hülle (28) beschreiben, umfasst,
wobei das Identifizieren der Zahnfleischkammlinie (30, 30a, 30b) das Identifizieren einer lingualen Zahnfleischkammlinie (30b) der äußeren Hülle (28) der Dentalprothesenbasis (28) oder das Erhalten von lingualen Zahnfleischkammliniendaten, die die linguale Zahnfleischkammlinie (30b) der äußeren Hülle (28) beschreiben, umfasst,
wobei die erste Bezugslinie (32) durch Parallelverschieben der labialen Zahnfleischkammlinie (30a) in Richtung eines Inneren der äußeren Hülle (28) um das erste Verschiebungsinkrement (M1) festgelegt wird oder wobei die labiale Zahnfleischkammlinie (30a) als die erste Bezugslinie (32) festgelegt wird,
wobei das Verfahren ferner umfasst:
- Festlegen einer zweiten Bezugslinie (34) durch Parallelverschieben der lingualen Zahnfleischkammlinie (30b) in Richtung eines Inneren der äußeren Hülle (28) um ein zweites Verschiebungsinkrement (M2) oder Festlegen der lingualen Zahnfleischkammlinie (30b) als eine zweite Bezugslinie (34) (S4),
- Festlegen einer zweiten Trennfläche (42) als eine Fläche, die alle geraden Linien umfasst, die sich durch den ersten Bezugspunkt (36) und durch die zweite Bezugslinie (34) erstrecken (S8), und
- Ableiten wenigstens eines Subvolumens (V2, V3) der Dentalprothesenbasis (24) als ein von der zweiten Trennfläche (42) und der äußeren Hülle (28) begrenztes Volumen (S9).

6. Computerimplementiertes Verfahren nach Anspruch 1,
wobei das Identifizieren der Zahnfleischkammlinie (30, 30a, 30b) das Identifizieren einer labialen Zahnfleischkammlinie (30a) der äußeren Hülle (28) der Dentalprothesenbasis (24) oder das Erhalten von labialen Zahnfleischkammliniendaten, die die labiale Zahnfleischkammlinie (30a) der äußeren Hülle (28) beschreiben, umfasst,
wobei das Identifizieren der Zahnfleischkammlinie (30, 30a, 30b) das Identifizieren einer lingualen Zahnfleischkammlinie (30b) der äußeren Hülle (28) der Dentalprothesenbasis (24) oder das Erhalten von lingualen Zahnfleischkammliniendaten, die die linguale Zahnfleischkammlinie (30b) der äußeren Hülle (28) beschreiben, umfasst,
wobei die erste Bezugslinie (32) durch Parallelverschieben der labialen Zahnfleischkammlinie (30a) in Richtung eines Inneren der äußeren Hülle (28) um das erste Verschiebungsinkrement (M1) festgelegt wird oder wobei die labiale Zahnfleischkammlinie (30a) als die erste Bezugslinie (32) festgelegt wird, wobei das Verfahren ferner umfasst:
- Festlegen einer zweiten Bezugslinie (34) durch Parallelverschieben der lingualen Zahnfleischkammlinie (30b) in Richtung eines Inneren der äußeren Hülle (28) um ein zweites Verschiebungsinkrement (M2) oder Festlegen der lingualen Zahnfleischkammlinie (30b) als eine zweite Bezugslinie (34) (S4),
- Festlegen eines zweiten Bezugspunkts (38), welcher in einer Verwendungsstellung der Dentalprothesenbasis (24) oberhalb oder unterhalb der Dentalprothesenbasis (24) liegt, wobei der erste Bezugspunkt (36) und der zweite Bezugspunkt (38) auf entgegengesetzten Seiten der Dentalprothesenbasis (24) liegen (S6),
- Festlegen einer zweiten Trennfläche (42) als eine Fläche, die alle geraden Linien umfasst, die sich durch den zweiten Bezugspunkt (38) und durch die zweite Bezugslinie (34) erstrecken (S8), und
- Ableiten wenigstens eines Subvolumens (V2, V3) der Dentalprothesenbasis (24) als ein von der zweiten Trennfläche (42) und der äußeren Hülle (28) begrenztes Volumen (S9).

7. Computerimplementiertes Verfahren nach Anspruch 6, wobei der erste Bezugspunkt (36) in einer Verwendungsstellung der Dentalprothesenbasis (24) unterhalb der Dentalprothesenbasis (24) liegt und wobei der zweite Bezugspunkt (38) in einer Verwendungsstellung der Dentalprothesenbasis (24) oberhalb der Dentalprothesenbasis (24) liegt oder
wobei der erste Bezugspunkt (36) in einer Verwendungsstellung der Dentalprothesenbasis (24) oberhalb der Dentalprothesenbasis (24) liegt und wobei der zweite Bezugspunkt (38) in einer Verwendungsstellung der Dentalprothesenbasis (24) unterhalb der Dentalprothesenbasis (24) liegt.

8. Computerimplementiertes Verfahren nach einem der vorhergehenden Ansprüche, wobei das Parallelverschieben entlang einer Richtung erfolgt, die in einer Verwendungsstellung der Dentalprothesenbasis (24) vertikal verläuft.

9. Computerimplementiertes Verfahren nach einem der vorhergehenden Ansprüche, wobei der erste Bezugspunkt (36) und/oder der zweite Bezugspunkt (38) auf einer Vertikalen durch einen Massenschwerpunkt der äußeren Hülle (28) der Dentalprothesenbasis (24) liegt oder wobei der erste Bezugspunkt (36) und/oder der zweite Bezugspunkt (38) auf einer Vertikalen durch einen Massenschwerpunkt einer Bounding Box der äußeren Hülle (28) der Dentalprothesenbasis (24) liegt.

10. Computerimplementiertes Verfahren nach einem der vorhergehenden Ansprüche, ferner umfassend
- Zuordnen einer Materialinformation, einer Farbinformation, einer Farbhelligkeitsinformation und/oder einer Transluzenzinformation zu demjenigen Subvolumen (V1, V2, V3), das die Zahnfleischkammlinie (30, 30a, 30b) umfasst, und
- Zuordnen einer Materialinformation, einer Farbinformation, einer Farbhelligkeitsinformation und/oder einer Transluzenzinformation zu einem Subvolumen (V1, V2, V3), das von der Zahnfleischkammlinie (30, 30a, 30b) separat ist, wobei sich das Subvolumen (V1, V2, V3), das die Zahnfleischkammlinie (30, 30a, 30b) umfasst, und das Subvolumen (V1, V2, V3), das von der Zahnfleischkammlinie (30, 30a, 30b) separat ist, in wenigstens einer aus Materialinformation, Farbinformation, Farbhelligkeitsinformation und Transluzenzinformation unterscheiden (S10).

11. Verfahren zur Herstellung einer Dentalprothesenbasis (24) mit einer vorgegebenen äußeren Hülle (28), umfassend:
- bestimmen eines Innenaufbaus der Dentalprothesenbasis (24) mit wenigstens einem Subvolumen (V1, V2, V3) mittels des Verfahrens nach einem der vorhergehenden Ansprüche, und
- fertigen der Dentalprothesenbasis (24) mit dem bestimmten Innenaufbau mittels Werkstoffen, die sich in wenigstens einem ausgewählt aus Material, Farbe, Farbhelligkeit und Transluzenz unterscheiden.

12. Dentalprothesenbasis (24) mit einer äußeren Hülle (28) und einem Innenaufbau, wobei der Innenaufbau mittels des Verfahrens nach einem der Ansprüche 1 bis 10 bestimmt ist.

13. Vorrichtung (10) zur Datenverarbeitung, umfassend Mittel (20) zur Ausführung des Verfahrens nach einem der Ansprüche 1 bis 10.

14. Computerprogramm (18), umfassend Befehle, die bei der Ausführung des Computerprogramms (18) durch einen Computer diesen veranlassen, das Verfahren nach einem der Ansprüche 1 bis 10 auszuführen.

15. Computerlesbares Medium (16), umfassend Befehle, die bei der Ausführung durch einen Computer diesen veranlassen, das Verfahren nach einem der Ansprüche 1 bis 10 auszuführen.

## Claims

1. Computer-implemented method for determining an internal structure of a dental prosthesis base (24), wherein the dental prosthesis base (24) essentially mimics gums, wherein the method comprises:
- obtaining outer shell data that describes an outer shell (28) of the dental prosthesis base (24) (S1),
- identifying a gingival crest line (30, 30a, 30b) of the outer shell (28) of the dental prosthesis base (24) or obtaining gingival crest line data that describes the gingival crest line (30, 30a, 30b) of the outer shell (28) (S2), wherein the gingival crest line (30, 30a, 30b) is a line that connects the locally highest points of the dental prosthesis base (24) with respect to a predetermined dimension or direction,
- defining a first reference line (32) by means of parallel displacement of the gingival crest line (30, 30a, 30b) in the direction of an interior of the outer shell (28) by a first displacement increment (M1) or defining the gingival crest line (30, 30a, 30b) as a first reference line (32) (S3),
- defining a first reference point (36) which lies above or below the dental prosthesis base (24) in a position of use of the dental prosthesis base (24) (S5),
- defining a first separating surface (40) as a surface that comprises all straight lines that extend through the first reference point (36) and through the first reference line (32) (S7),
- deriving at least one sub-volume (V1, V3) of the dental prosthesis base (24) as a volume delimited by the first separating surface (40) and the outer shell (28) (S9), and
- allocating a material to the at least one sub-volume (V1, V3) that comprises different optical properties with respect to a material that is allocated to another sub-volume.

2. Computer-implemented method according to claim 1, further comprising
- defining a second reference line (34) by means of parallel displacement of the gingival crest line (30, 30a, 30b) in the direction of an interior of the outer shell (28) by a second displacement increment (M2), wherein the first displacement increment (M1) and the second displacement increment (M2) are different (S4),
- defining a second separating surface (42) as a surface that comprises all straight lines that extend through the first reference point (32) and through the second reference line (34) (S8), and
- deriving at least one sub-volume (V2, V3) of the dental prosthesis base (24) as a volume that is delimited by the second separating surface (42) and the outer shell (28) (S9).

3. Computer-implemented method according to claim 1, further comprising
- defining a second reference line (34) by means of parallel displacement of the gingival crest line (30, 30a, 30b) in the direction of an interior of the outer shell (28) by a second displacement increment (M2), wherein the first displacement increment (M1) and the second displacement increment (M2) are different (S4),
- defining a second reference point (38) which lies above or below the dental prosthesis base in a position of use of the dental prosthesis base (24), wherein the first reference point (36) and the second reference point (38) are different (S6),
- defining a second separating surface (42) as a surface that comprises all straight lines that extend through the second reference point (38) and through the second reference line (34) (S8), and
- deriving at least one sub-volume (V2, V3) of the dental prosthesis base (24) as a volume that is delimited by the second separating surface (42) and the outer shell (28) (S9).

4. Computer-implemented method according to one of the preceding claims, wherein the gingival crest line (30, 30a, 30b) is a labial gingival crest line (30a) or wherein the gingival crest line (30, 30a, 30b) is a lingual gingival crest line (30b).

5. Computer-implemented method according to claim 1,
wherein identifying the gingival crest line (30, 30a, 30b) comprises identifying a labial gingival crest line (30a) of the outer shell (28) of the dental prosthesis base (24) or obtaining labial gingival crest line data that describes the labial gingival crest line (30a) of the outer shell (28),
wherein identifying the gingival crest line (30, 30a, 30b) comprises identifying a lingual gingival crest line (30b) of the outer shell (28) of the dental prosthesis base (28) or obtaining lingual gingival crest line data that describes the lingual gingival crest line (30b) of the outer shell (28),
wherein the first reference line (32) is defined by means of parallel displacement of the labial gingival crest line (30a) in the direction of an interior of the outer shell (28) by the first displacement increment (M1) or wherein the labial gingival crest line (30a) is defined as the first reference line (32), wherein the method further comprises:
- defining a second reference line (34) by means of parallel displacement of the lingual gingival crest line (30b) in the direction of an interior of the outer shell (28) by a second displacement increment (M2) or defining the lingual gingival crest line (30b) as a second reference line (34) (S4),
- defining a second separating surface (42) as a surface that comprises all straight lines that extend through the first reference point (36) and through the second reference line (34) (S8), and
- deriving at least one sub-volume (V2, V3) of the dental prosthesis base (24) as a volume that is delimited by the second separating surface (42) and the outer shell (28) (S9).

6. Computer-implemented method according to claim 1,
wherein identifying the gingival crest line (30, 30a, 30b) comprises identifying a labial gingival crest line (30a) of the outer shell (28) of the dental prosthesis base (24) or obtaining labial gingival crest line data that describes the labial gingival crest line (30a) of the outer shell (28),
wherein identifying the gingival crest line (30, 30a, 30b) comprises identifying a lingual gingival crest line (30b) of the outer shell (28) of the dental prosthesis base (24) or obtaining lingual gingival crest line data that describes the lingual gingival crest line (30b) of the outer shell (28),
wherein the first reference line (32) is defined by means of parallel displacement of the labial gingival crest line (30a) in the direction of an interior of the outer shell (28) by the first displacement increment (M1) or wherein the labial gingival crest line (30a) is defined as the first reference line (32), wherein the method further comprises:
- defining a second reference line (34) by means of parallel displacement of the lingual gingival crest line (30b) in the direction of an interior of the outer shell (28) by a second displacement increment (M2) or defining the lingual gingival crest line (30b) as a second reference line (34) (S4),
- defining a second reference point (38) which lies above or below the dental prosthesis base (24) in a position of use of the dental prosthesis base (24), wherein the first reference point (36) and the second reference point (38) lie on opposite sides of the dental prosthesis base (24) (S6),
- defining a second separating surface (42) as a surface that comprises all straight lines that extend through the second reference point (38) and through the second reference line (34) (S8), and
- deriving at least one sub-volume (V2, V3) of the dental prosthesis base (24) as a volume that is delimited by the second separating surface (42) and the outer shell (28) (S9).

7. Computer-implemented method according to claim 6, wherein the first reference point (36) lies below the dental prosthesis base (24) in a position of use of the dental prosthesis base (24) and wherein the second reference point (38) lies above the dental prosthesis base (24) in a position of use of the dental prosthesis base (24) or
wherein the first reference point (36) lies above the dental prosthesis base (24) in a position of use of the dental prosthesis base (24) and wherein the second reference point (38) lies below the dental prosthesis base (24) in a position of use of the dental prosthesis base (24).

8. Computer-implemented method according to one of the preceding claims, wherein the parallel displacement takes place along a direction that runs vertically in a position of use of the dental prosthesis base (24).

9. Computer-implemented method according to one of the preceding claims, wherein the first reference point (36) and/or the second reference point (38) lies on a vertical through a mass centre of gravity of the outer shell (28) of the dental prosthesis base (24) or wherein the first reference point (36) and/or the second reference point (38) lies on a vertical through a mass centre of gravity of a bounding box of the outer shell (28) of the dental prosthesis base (24).

10. Computer-implemented method according to one of the preceding claims, further comprising
- allocating material information, colour information, colour brightness information and/or translucency information to that sub-volume (V1, V2, V3) which comprises the gingival crest line (30, 30a, 30b), and
- allocating material information, colour information, colour brightness information and/or translucence information to a sub-volume (V1, V2, V3) that is separate from the gingival crest line (30, 30a, 30b), wherein the sub-volume (V1, V2, V3) that comprises the gingival crest line (30, 30a, 30b) and the sub-volume (V1, V2, V3) that is separate from the gingival crest line (30, 30a, 30b) differ in at least one of material information, colour information, colour brightness information and translucence information (S10).

11. Method for producing a dental prosthesis base (24) having a predetermined outer shell (28), comprising:
- determining an internal structure of the dental prosthesis base (24) with at least one sub-volume (V1, V2, V3) by means of the method according to one of the preceding claims, and
- manufacturing the dental prosthesis base (24) with the specific internal structure by means of materials that differ in at least one selected from material, colour, colour brightness and translucency.

12. Dental prosthesis base (24) having an outer shell (28) and an inner structure, wherein the inner structure is determined by means of the method according to one of claims 1 to 10.

13. Apparatus (10) for data processing, comprising means (20) for implementing the method according to one of claims 1 to 10.

14. Computer program (18) comprising commands that when the computer program (18) is being executed by a computer causes this computer to implement the method according to one of claims 1 to 10.

15. Computer readable medium (16) comprising commands that when executed by a computer causes this computer to implement the method as claimed in one of claims 1 to 10.

## Revendications

1. Procédé mis en œuvre par ordinateur pour déterminer une structure interne d'une base de prothèse dentaire (24), dans lequel la base de prothèse dentaire (24) simule essentiellement des gencives, dans lequel le procédé comprend de :
- obtenir des données d'enveloppe extérieure qui décrivent une enveloppe extérieure (28) de la base de prothèse dentaire (24) (S1),
- identifier une ligne de crête gingivale (30, 30a, 30b) de l'enveloppe extérieure (28) de la base de prothèse dentaire (24) ou obtenir des données de ligne de crête gingivale qui décrivent la ligne de crête gingivale (30, 30a, 30b) de l'enveloppe extérieure (28) (S2), dans lequel la ligne de crête gingivale (30, 30a, 30b) est une ligne qui, par rapport à une dimension ou une direction prédéterminée, relie les points localement les plus élevés de la base de prothèse dentaire (24),
- définir une première ligne de référence (32) par un déplacement parallèle de la ligne de crête gingivale (30, 30a, 30b) en direction d'un intérieur de l'enveloppe extérieure (28) d'un premier incrément de déplacement (M1), ou définir la ligne de crête gingivale (30, 30a, 30b) comme une première ligne de référence (32) (S3),
- définir un premier point de référence (36) qui se situe dans une position d'utilisation de la base de prothèse dentaire (24) au-dessus ou en dessous de la base de prothèse dentaire (24) (S5),
- définir une première surface de séparation (40) comme une surface qui comprend toutes les lignes droites qui passent par le premier point de référence (36) et par la première ligne de référence (32) (S7),
- déduire au moins un sous-volume (V1, V3) de la base de prothèse dentaire (24) comme un volume délimité par la première surface de séparation (40) et l'enveloppe extérieure (28) (S9), et
- affecter un matériau audit au moins un sous-volume (V1, V3) qui présente des propriétés optiques différentes par rapport à un matériau qui est affecté à un autre sous-volume.

2. Procédé mis en œuvre par ordinateur selon la revendication 1, comprenant en outre de :
- définir une seconde ligne de référence (34) par un déplacement parallèle de la ligne de crête gingivale (30, 30a, 30b) en direction d'un intérieur de l'enveloppe extérieure (28) d'un second incrément de déplacement (M2), dans lequel le premier incrément de déplacement (M1) et le second incrément de déplacement (M2) sont différents (S4),
- définir une seconde surface de séparation (42) comme une surface qui comprend toutes les lignes droites qui passent par le premier point de référence (32) et par la seconde ligne de référence (34) (S8), et
- déduire au moins un sous-volume (V2, V3) de la base de prothèse dentaire (24) comme un volume délimité par la seconde surface de séparation (42) et l'enveloppe extérieure (28) (S9).

3. Procédé mis en œuvre par ordinateur selon la revendication 1, comprenant en outre de :
- définir une seconde ligne de référence (34) par un déplacement parallèle de la ligne de crête gingivale (30, 30a, 30b) en direction d'un intérieur de l'enveloppe extérieure (28) d'un second incrément de déplacement (M2), dans lequel le premier incrément de déplacement (M1) et le second incrément de déplacement (M2) sont différents (S4),
- définir un second point de référence (38) qui se situe dans une position d'utilisation de la base de prothèse dentaire (24) au-dessus ou en dessous de la base de prothèse dentaire, dans lequel le premier point de référence (36) et le second point de référence (38) sont différents (S6),
- définir une seconde surface de séparation (42) comme une surface qui comprend toutes les lignes droites qui passent par le second point de référence (38) et par la seconde ligne de référence (34) (S8), et
- déduire au moins un sous-volume (V2, V3) de la base de prothèse dentaire (24) comme un volume délimité par la seconde surface de séparation (42) et l'enveloppe extérieure (28) (S9).

4. Procédé mis en œuvre par ordinateur selon l'une des revendications précédentes, dans lequel la ligne de crête gingivale (30, 30a, 30b) est une ligne de crête gingivale labiale (30a), ou dans lequel la ligne de crête gingivale (30, 30a, 30b) est une ligne de crête gingivale linguale (30b).

5. Procédé mis en œuvre par ordinateur selon la revendication 1,
dans lequel l'identification de la ligne de crête gingivale (30, 30a, 30b) comprend l'identification d'une ligne de crête gingivale labiale (30a) de l'enveloppe extérieure (28) de la base de prothèse dentaire (24) ou l'obtention de données de ligne de crête gingivale labiale qui décrivent la ligne de crête gingivale labiale (30a) de l'enveloppe extérieure (28) ;
dans lequel l'identification de la ligne de crête gingivale (30, 30a, 30b) comprend l'identification d'une ligne de crête gingivale linguale (30b) de l'enveloppe extérieure (28) de la base de prothèse dentaire (28) ou l'obtention de données de ligne de crête gingivale linguale qui décrivent la ligne de crête gingivale linguale (30b) de l'enveloppe extérieure (28),
dans lequel la première ligne de référence (32) est définie par un déplacement parallèle de la ligne de crête gingivale labiale (30a) en direction d'un intérieur de l'enveloppe extérieure (28) du premier incrément de déplacement (M1), ou dans lequel la ligne de crête gingivale labiale (30a) est définie comme la première ligne de référence (32), dans lequel le procédé comprend en outre de :
- définir une seconde ligne de référence (34) par un déplacement parallèle de la ligne de crête gingivale linguale (30b) en direction d'un intérieur de l'enveloppe extérieure (28) d'un second incrément de déplacement (M2), ou définir la ligne de crête gingivale linguale (30b) comme une seconde ligne de référence (34) (S4),
- définir une seconde surface de séparation (42) comme une surface qui comprend toutes les lignes droites qui passent par le premier point de référence (36) et par la seconde ligne de référence (34) (S8), et
- déduire au moins un sous-volume (V2, V3) de la base de prothèse dentaire (24) comme un volume délimité par la seconde surface de séparation (42) et l'enveloppe extérieure (28) (S9).

6. Procédé mis en œuvre par ordinateur selon la revendication 1,
dans lequel l'identification de la ligne de crête gingivale (30, 30a, 30b) comprend l'identification d'une ligne de crête gingivale labiale (30a) de l'enveloppe extérieure (28) de la base de prothèse dentaire (24) ou l'obtention de données de ligne de crête gingivale labiale qui décrivent la ligne de crête gingivale labiale (30a) de l'enveloppe extérieure (28),
dans lequel l'identification de la ligne de crête gingivale (30, 30a, 30b) comprend l'identification d'une ligne de crête gingivale linguale (30b) de l'enveloppe extérieure (28) de la base de prothèse dentaire (24) ou l'obtention de données de ligne de crête gingivale linguale qui décrivent la ligne de crête gingivale linguale (30b) de l'enveloppe extérieure (28),
dans lequel la première ligne de référence (32) est définie par un déplacement parallèle de la ligne de crête gingivale labiale (30a) en direction d'un intérieur de l'enveloppe extérieure (28) du premier incrément de déplacement (M1), ou dans lequel la ligne de crête gingivale labiale (30a) est définie comme la première ligne de référence (32), dans lequel le procédé comprend en outre de :
- définir une seconde ligne de référence (34) par un déplacement parallèle de la ligne de crête gingivale linguale (30b) en direction d'un intérieur de l'enveloppe extérieure (28) d'un second incrément de déplacement (M2), ou définir la ligne de crête gingivale linguale (30b) comme une seconde ligne de référence (34) (S4),
- définir un second point de référence (38) qui se situe dans une position d'utilisation de la base de prothèse dentaire (24) au-dessus ou en dessous de la base de prothèse dentaire (24), dans lequel le premier point de référence (36) et le second point de référence (38) se situent sur des côtés opposés de la base de prothèse dentaire (24) (S6),
- définir une seconde surface de séparation (42) comme une surface qui comprend toutes les lignes droites qui passent par le second point de référence (38) et par la seconde ligne de référence (34) (S8), et
- déduire au moins un sous-volume (V2, V3) de la base de prothèse dentaire (24) comme un volume délimité par la seconde surface de séparation (42) et l'enveloppe extérieure (28) (S9).

7. Procédé mis en œuvre par ordinateur selon la revendication 6, dans lequel le premier point de référence (36) se situe dans une position d'utilisation de la base de prothèse dentaire (24) en dessous de la base de prothèse dentaire (24), et dans lequel le second point de référence (38) se situe dans une position d'utilisation de la base de prothèse dentaire (24) au-dessus de la base de prothèse dentaire (24) ou
dans lequel le premier point de référence (36) se situe dans une position d'utilisation de la base de prothèse dentaire (24) au-dessus de la base de prothèse dentaire (24), et dans lequel le second point de référence (38) se situe dans une position d'utilisation de la base de prothèse dentaire (24) en dessous de la base de prothèse dentaire (24).

8. Procédé mis en œuvre par ordinateur selon l'une des revendications précédentes, dans lequel le déplacement parallèle s'effectue le long d'une direction qui s'étend verticalement dans une position d'utilisation de la base de prothèse dentaire (24).

9. Procédé mis en œuvre par ordinateur selon l'une des revendications précédentes, dans lequel le premier point de référence (36) et/ou le second point de référence (38) se situe sur une verticale passant par un centre de masse de l'enveloppe extérieure (28) de la base de prothèse dentaire (24), ou dans lequel le premier point de référence (36) et/ou le second point de référence (38) se situe sur une verticale passant par un centre de masse d'une boîte englobante de l'enveloppe extérieure (28) de la base de prothèse dentaire (24).

10. Procédé mis en œuvre par ordinateur selon l'une des revendications précédentes, comprenant en outre de :
- affecter une information sur un matériau, une information sur une couleur, une information sur une luminance de couleur et/ou une information sur une translucidité à chaque sous-volume (V1, V2, V3) qui comprend la ligne de crête gingivale (30, 30a, 30b), et
- affecter une information sur un matériau, une information sur une couleur, une information sur une luminance de couleur et/ou une information sur une translucidité à un sous-volume (V1, V2, V3) qui est séparé de la ligne de crête gingivale (30, 30a, 30b), dans lequel le sous-volume (V1, V2, V3) comprend la ligne de crête gingivale (30, 30a, 30b), et le sous-volume (V1, V2, V3) qui est séparé de la ligne de crête gingivale (30, 30a, 30b), diffèrent par au moins une parmi une information sur un matériau, une information sur une couleur, une information sur une luminance de couleur et une information sur une translucidité (S10).

11. Procédé de production d'une base de prothèse dentaire (24) ayant une enveloppe extérieure (28) prédéterminée, comprenant de :
- déterminer une structure interne de la base de prothèse dentaire (24) avec au moins un sous-volume (V1, V2, V3) au moyen du procédé selon l'une des revendications précédentes, et
- fabriquer la base de prothèse dentaire (24) avec la structure interne déterminée au moyen de matériaux qui diffèrent par au moins un choisi parmi un matériau, une couleur, une luminance de couleur et une translucidité.

12. Base de prothèse dentaire (24) ayant une enveloppe extérieure (28) et une structure interne (30), dans laquelle la structure interne est déterminée au moyen du procédé selon l'une des revendications 1 à 10.

13. Dispositif (10) de traitement de données, comprenant des moyens (20) pour mettre en œuvre le procédé selon l'une des revendications 1 à 10.

14. Programme informatique (18) comprenant des instructions qui, lors de l'exécution du programme informatique (18) par un ordinateur, amènent celui-ci à mettre en œuvre le procédé selon l'une des revendications 1 à 10.

15. Support lisible par ordinateur (16), comprenant des instructions qui, lorsqu'elles sont exécutées par un ordinateur, amènent celui-ci à mettre en œuvre le procédé selon l'une des revendications 1 à 10.
